# EUROPÄISCHE PATENTSCHRIFT

(11) **EP 3 504 039 B1**
(45) Veröffentlichungstag und Bekanntmachung des Hinweises auf die Patenterteilung: **07.10.2020**
(21) Anmeldenummer: 17758811.8
(22) Anmeldetag: 09.08.2017
(51) Int. Cl.: B29C 44/28, B29C 44/32, B29C 44/46, B29B 15/12, B29C 70/50, B29C 70/08

(54) **VERFAHREN ZUR KONTINUIERLICHEN HERSTELLUNG VON FASERVERSTÄRKTEN SCHAUMSTOFFEN**
METHOD FOR THE CONTINUOUS PRODUCTION OF FIBRE-REINFORCED FOAMS
PROCEDE DE FABRICATION CONTINUE DE MOUSSES RENFORCEES PAR DES FIBRES

(30) Priorität: 26.08.2016 EP 16185828
(43) Veröffentlichungstag der Anmeldung: 03.07.2019
(73) Patentinhaber: BASF SE, 67056 Ludwigshafen (DE)
(72) Erfinder: RUCKDAESCHEL, Holger, 67056 Ludwigshafen (DE); SOMMER, Maria-Kristin, 67056 Ludwigshafen (DE); ARBTER, Rene, 67056 Ludwigshafen (DE); KOLTZENBURG, Sebastian, 67056 Ludwigshafen (DE)
(74) Vertreter: BASF IP Association
(86) Internationale Anmeldenummer: PCT/EP2017/070180
(87) Internationale Veröffentlichungsnummer: WO 2018/036821

(56) Entgegenhaltungen:
- WO-A1-2012/025165
- WO-A1-2013/053666
- US-A- 3 246 058

## Beschreibung

Die vorliegende Erfindung betrifft ein Werkzeug (W) mit mindestens einer ersten Eingangsöffnung (E1) und mindestens einer zweiten Eingangsöffnung (E2) sowie mindestens einer ersten Ausgangsöffnung (A1), mindestens einer zweiten Ausgangsöffnung (A2) und mindestens einer dritten Ausgangsöffnung (A3), wobei die zweite Ausgangsöffnung (A2) und die dritte Ausgangsöffnung (A3) mit der ersten Ausgangsöffnung (A1) alternieren. Die vorliegende Erfindung betrifft weiterhin ein Verfahren zur Herstellung eines Faser/Schaum-Verbundwerkstoffs durch Extrusion durch das Werkzeug (W) sowie die Verwendung des Werkzeugs (W) zur Herstellung eines Faser/Schaum-Verbundwerkstoffs durch Extrusion.

Faser/Schaum-Verbundwerkstoffe, in Fachkreisen auch als verstärkte Schaumstoffe oder faserverstärkte Schaumstoffe bezeichnet, sind industriell von besonderer Bedeutung, da sie eine hohe Festigkeit und Steifigkeit aufweisen bei gleichzeitig geringem Gewicht. Daher sind Faser/Schaum-Verbundwerkstoffe insbesondere interessant für Bauteile, die möglichst leicht und trotzdem mechanisch äußerst stabil sein sollen. So werden Faser/Schaum-Verbundwerkstoffe beispielsweise für Bauteile von Booten und Schiffen sowie Autos verwendet. Sie werden außerdem als Kern von Rotorblättern in Windturbinen eingesetzt. Faser/Schaum-Verbundwerkstoffe sollen für den Einsatz in derartigen Bauelementen möglichst in allen drei Raumrichtungen gute mechanische Eigenschaften, insbesondere eine hohe Schubsteifigkeit aufweisen.

Im Stand der Technik sind verschiedene Verfahren zur Herstellung von Faser/Schaum-Verbundwerkstoffen beschrieben.

Die US 6,206,669 beschreibt eine Vorrichtung zur kontinuierlichen Herstellung eines verstärkten Schaumstoffs, der aus einem innenliegenden Schaumstoff und einem außenliegenden Fasermaterial besteht. Das außenliegende Fasermaterial besteht aus mindestens zwei Schichten, wobei eine Schicht verstärkend wirkt und die andere ein Vliesstoff ist. In die Vorrichtung wird das Fasermaterial so eingeführt, dass es eine Art Schlauch bildet, in den ein schäumbares Polymer injiziert wird, das dann durch Aufschäumen den innenliegenden Schaumstoff bildet. Der innenliegende Schaumstoff haftet an dem Fasermaterial dadurch, dass er in die Maschen des Vliesstoffs eindringt. In der in US 6,206,669 beschriebenen Vorrichtung ist es zwingend nötig, dass das schäumbare Polymer in den durch das Fasermaterial gebildeten Hohlraum injiziert wird. Mit dieser Vorrichtung ist es nicht möglich, das Fasermaterial mit dem Schaum zu umgeben. Anders ausgedrückt ist es mit der Vorrichtung gemäß US 6,206,669 nicht möglich, das Fasermaterial in den Schaumstoff einzubetten. Dies ist als nachteilig anzusehen, da ein verstärkter Schaumstoff insbesondere dann eine hohe Festigkeit und Steifigkeit aufweist, wenn das Fasermaterial in den Schaumstoff eingebettet wird. In allen drei Raumrichtungen werden gute mechanische Eigenschaften vor allem dann erreicht, wenn das Fasermaterial nicht planar in den Schaumstoff eingebettet wird, sondern das Fasermaterial in mindestens zwei Raumrichtungen strukturiert ist.

Die WO 2012/025165 beschreibt ein Kernelement zur Herstellung von verstärkten Schaumstoffen. Das Kernelement wird hergestellt, indem ein vorgeschnittenes Schaumstoffelement auf mindestens einer Seite mit einem Fasermaterial verklebt wird. Dies kann beispielsweise in einer Form erfolgen, die das Fasermaterial enthält, und in die dann ein schäumbares Polymer injiziert wird, welches beim Aufschäumen den Schaumstoff bildet und sich mit dem Fasermaterial verbindet. Die so erhaltenen Kernelemente können anschließend über die Seite, auf die das Fasermaterial aufgebracht ist, miteinander verklebt werden, um so einen verstärkten Schaumstoff zu bilden. Mit dem in der WO 2012/025165 beschriebenen Verfahren können verstärkte Schaumstoffe hergestellt werden, bei denen das Fasermaterial in den Schaumstoff eingebettet wird. Nachteilig bei dem beschriebenen Verfahren ist allerdings, dass eine kontinuierliche Durchführung nicht möglich ist. Daher ist das Verfahren äußerst zeitaufwändig und kostenintensiv. Zudem müssen die Flächen, auf die das Fasermaterial aufgebracht ist, planar sein, um ein Verkleben der Kernelemente miteinander zu ermöglichen.

Die US 5,866,051 offenbart ein kontinuierliches Verfahren zur Herstellung von faserverstärkten Schaumstoffen. Bei diesem Verfahren wird ein schäumbares Polymer über eine Düse extrudiert und gleichzeitig ein Fasermaterial (Prepreg) in Extrusionsrichtung gezogen. Gemäß einem der in US 5,866,051 beschriebenen Verfahren werden das schäumbare Polymer und das Fasermaterial in der Düse miteinander verbunden. Gemäß US 5,866,051 ist es außerdem möglich, das schäumbare Polymer und das Fasermaterial erst außerhalb der Düse miteinander zu verbinden. Das Fasermaterial wird dann allerdings auf den Schaumstoff aufgebracht. In dieser Ausführungsform kann das Fasermaterial also nicht in den Schaumstoff eingebettet werden. Wenn das Fasermaterial und der Schaumstoff außerhalb der Düse miteinander verbunden werden, dann wird außerdem das Fasermaterial nicht durch die gleiche Düse wie der Schaumstoff extrudiert. Daher sind zusätzlich komplexe Rollensysteme erforderlich, um das Fasermaterial auf den Schaumstoff aufzubringen. Die US 5,866,051 offenbart außerdem nur die Verwendung von planaren Fasermaterialien in dem verstärkten Schaumstoff. Eine optimale Verstärkung in drei Raumrichtungen ist mit dem beschriebenen Verfahren daher nicht möglich.

Der vorliegenden Erfindung liegt daher die Aufgabe zugrunde, ein Werkzeug (W) sowie ein Verfahren zur Herstellung von Faser/Schaum-Verbundwerkstoffen bereitzustellen, die die Nachteile der Vorrichtungen und Verfahren, wie sie im Stand der Technik beschrieben sind, nicht oder in vermindertem Maße aufweisen.

Gelöst wird diese Aufgabe durch ein Werkzeug (W), umfassend ein Gehäuse (1) mit
- mindestens einer ersten Eingangsöffnung (E1) und mindestens einer zweiten Eingangsöffnung (E2),
- mindestens einer ersten Ausgangsöffnung (A1), mindestens einer zweiten Ausgangsöffnung (A2) und mindestens einer dritten Ausgangsöffnung (A3) und
- einer ersten Seite (9) mit einer Breite (B),
wobei
- die erste Ausgangsöffnung (A1), die zweite Ausgangsöffnung (A2) und die dritte Ausgangsöffnung (A3) an der ersten Seite (9) des Gehäuses (1) angeordnet sind und wobei
- die erste Ausgangsöffnung (A1) mit der ersten Eingangsöffnung (E1) verbunden ist,
wobei
- die zweite Ausgangsöffnung (A2) und die dritte Ausgangsöffnung (A3) mit der zweiten Eingangsöffnung (E2) über einen Mehrwege-Verteiler (6) miteinander verbunden sind und
- die zweite Ausgangsöffnung (A2) und die dritte Ausgangsöffnung (A3) mit der ersten Ausgangsöffnung (A1) zumindest über einen Teil der Breite (B) der ersten Seite (9) alternieren.

Die der vorliegenden Erfindung zugrundeliegende Aufgabe wird außerdem gelöst durch ein Verfahren zur Herstellung eines Faser/Schaum-Verbundwerkstoffs durch Extrusion durch das erfindungsgemäße Werkzeug (W), umfassend die folgenden Schritte:
a) Bereitstellen eines Fasermaterials (FM) und eines schäumbaren Polymers (SP),
b) Zuführen des Fasermaterials (FM) durch die erste Eingangsöffnung (E1) in das Werkzeug (W),
c) Zuführen des schäumbaren Polymers (SP) durch die zweite Eingangsöffnung (E2) in das Werkzeug (W), und
d) Extrusion des Fasermaterials (FM) durch die erste Ausgangsöffnung (A1) des Werkzeugs (W) und Extrusion des schäumbaren Polymers (SP) durch die zweite Ausgangsöffnung (A2) und durch die dritte Ausgangsöffnung (A3) des Werkzeugs (W), wobei das schäumbare Polymer (SP) unter Erhalt eines Schaumstoffs aufschäumt und sich mit dem Fasermaterial (FM) verbindet, unter Erhalt des Faser/Schaum-Verbundwerkstoffs.

Das erfindungsgemäße Werkzeug (W) sowie das erfindungsgemäße Verfahren ermöglichen die Herstellung von Faser/Schaum-Verbundwerkstoffen, bei denen das Fasermaterial (FM) in den Schaumstoff eingebettet ist. Durch das erfindungsgemäße Werkzeug (W) kann das Fasermaterial (FM) zusammen mit dem schäumbaren Polymer (SP) aus dem Werkzeug (W) extrudiert werden, so dass das Fasermaterial (FM) in den Schaumstoff eingebettet werden kann.

Da das im Verfahren der vorliegenden Erfindung eingesetzte schäumbare Polymer (SP) und das Fasermaterial (FM) durch das gleiche Werkzeug (W) extrudiert werden können, wird eine aufwändige Führung des Fasermaterials (FM) über komplexe Rollensysteme im erfindungsgemäßen Verfahren vermieden.

Da mit dem erfindungsgemäßen Werkzeug (W) und dem erfindungsgemäßen Verfahren das schäumbare Polymer (SP) bzw. der Schaumstoff und das Fasermaterial (FM) erst nach dem Austritt aus den Ausgangsöffnungen miteinander in Kontakt kommen, kann das schäumbare Polymer (SP) bis zum Austritt aus der zweiten Ausgangsöffnung (A2) und aus der dritten Ausgangsöffnung (A3) unter hohem Druck gehalten werden.

Dies ist in einer bevorzugten Ausführungsform der vorliegenden Erfindung von Bedeutung, da in dieser bevorzugten Ausführungsform in dem schäumbaren Polymer (SP) ein Treibmittel gelöst wird. Je höher der Druck, unter dem das schaumbare Polymer (SP) gehalten wird, desto mehr Treibmittel kann in dem schäumbaren Polymer (SP) gelöst werden. Je mehr Treibmittel in dem schäumbaren Polymer (SP) gelöst wird, desto flüssiger wird das schäumbare Polymer (SP), desto niedriger ist also seine Viskosität und desto höher die Fließfähigkeit. So wird außerdem ein Verstopfen der zweiten und der dritten Ausgangsöffnung (A2, A3) sowie der Verbindung zwischen der zweiten Eingangsöffnung (E2) und der zweiten Ausgangsöffnung (A2) und zwischen der zweiten Eingangsöffnung (E2) und der dritten Ausgangsöffnung (A3) vermieden. Da der Druck, unter dem das schäumbare Polymer (SP) gehalten wird, genau kontrolliert werden kann, kann genau geplant werden, wie viel Treibmittel in dem schäumbaren Polymer (SP) gelöst wird und dadurch genau bestimmt werden, wie stark das schäumbare Polymer (SP) bei der Extrusion durch die zweite Ausgangsöffnung (A2) und durch die dritte Ausgangsöffnung (A3) aufschäumt, unter Erhalt des Schaumstoffes. Zudem schäumt das schäumbare Polymer (SP) dadurch besonders gleichmäßig auf.

Erfindungsgemäß werden die zweite Ausgangsöffnung (A2) und die dritte Ausgangsöffnung (A3) mit der zweiten Eingangsöffnung (E2) durch einen Mehrwege-Verteiler (6) verbunden. Die Verwendung des Mehrwegeverteilers (6), um das durch die zweite Eingangsöffnung (E2) zugeführte schäumbare Polymer (SP) auf die zweite Ausgangsöffnung (A2) und die dritte Ausgangsöffnung (A3) zu verteilen, ist besonders vorteilhaft, da das durch die zweite Ausgangsöffnung (A2) extrudierte schäumbare Polymer (SP) identisch ist mit dem durch die dritte Ausgangsöffnung (A3) extrudierten schäumbaren Polymer (SP). Das durch die zweite und die dritte Ausgangsöffnung (A2, A3) extrudierte schäumbare Polymer (SP) zeigt daher auf beiden Seiten des Fasermaterials (FM) ein identisches Schäumverhalten, so dass deutlich gleichmäßigere Faser/Schaum-Verbundwerkstoffe erhalten werden. In Verfahren, in denen durch die zweite und die dritte Ausgangsöffnung (A2, A3) ein schäumbares Polymer (SP), das nicht über dieselbe zweite Eingangsöffnung (E2) zugeführt worden ist, extrudiert wird, ist es prinzipiell möglich, dass das schäumbare Polymer (SP), das durch eine der beiden Ausgangsöffnungen (A2, A3) extrudiert wird, stärker aufschäumt als das durch die andere der beiden Ausgangsöffnungen (A2, A3) extrudierte und dadurch der Faser/Schaum-Verbundwerkstoff verzogen wird.

In den im Stand der Technik beschriebenen Verfahren wird das schäumbare Polymer (SP) beispielsweise in einem Extruder, bereitgestellt. Der Extruder ist mit einer Düse (einem Werkzeug) verbunden. Üblicherweise weist die Düse (das Werkzeug) eine Eingangsöffnung auf, mit der der Extruder dann direkt verbunden ist, diese Eingangsöffnung ist wiederum mit einer Ausgangsöffnung verbunden. Im Allgemeinen werden mehrere Eingangsöffnungen verwendet, wenn mehrere Ausgangsöffnungen an der Düse vorhanden sind. Die Eingangsöffnungen sind dann jeweils über Verbindungsstücke mit dem jeweiligen Extruder verbunden. Geeignete Verbindungsstücke sind beispielsweise Flansche. Die Verbindungsstücke sind typischerweise Schwachstellen, an denen Undichtigkeiten (Lecks) auftreten können. Durch die Verwendung des Mehrwegeverteilers (6) in dem erfindungsgemäßen Werkzeug (W) kann die Zahl von zweiten Eingangsöffnungen (E2) geringgehalten werden gegenüber der Zahl der zweiten Ausgangsöffnungen (A2) und der dritten Ausgangsöffnungen (A3). Damit ist auch die Zahl der Stellen, an denen sich potentiell Lecks bilden können, gering, was das Verfahren der vorliegenden Erfindung sicherer macht als die im Stand der Technik beschriebenen Verfahren, da über derartige Lecks beispielsweise giftige Dämpfe austreten können. Außerdem nimmt durch Lecks der Druck in der Schmelze des schäumbaren Polymers (SP) ab, was ebenfalls als nachteilig anzusehen ist.

Das Verfahren der vorliegenden Erfindung ist außerdem kostengünstiger als die im Stand der Technik beschriebenen Verfahren, da die Herstellung des Faser/Schaum-Verbundwerkstoffs kontinuierlich durchgeführt werden kann. Zudem ermöglichen das erfindungsgemäße Werkzeug (W) und das erfindungsgemäße Verfahren die Herstellung von Faser/Schaum-Verbundwerkstoffen, bei denen das Fasermaterial (FM) eine zweidimensionale Strukturierung aufweist. Erfindungsgemäß hergestellte Faser/Schaum-Verbundwerkstoffe mit zweidimensionaler Strukturierung des Fasermaterials (FM) weisen besonders gute mechanische Eigenschaften in allen drei Raumrichtungen auf, insbesondere eine sehr hohe Schubsteifigkeit.

Nachfolgend werden das erfindungsgemäße Werkzeug (W) sowie das erfindungsgemäße Verfahren näher definiert.

Erfindungsgemäß umfasst das Werkzeug (W) ein Gehäuse (1). Das Gehäuse (1) kann alle dem Fachmann bekannten Formen aufweisen. Das Gehäuse (1) kann beispielsweise ein offenes Gehäuse oder ein geschlossenes Gehäuse sein. Erfindungsgemäß bevorzugt ist das Gehäuse (1) ein geschlossenes Gehäuse.

Ein geschlossenes Gehäuse weist außer der ersten Eingangsöffnung (E1), der zweiten Eingangsöffnung (E2), der ersten Ausgangsöffnung (A1), der zweiten Ausgangsöffnung (A2) und der dritten Ausgangsöffnung (A3) keine weiteren Öffnungen auf.

Ein offenes Gehäuse kann neben der ersten Eingangsöffnung (E1), der zweiten Eingangsöffnung (E2), der ersten Ausgangsöffnung (A1), der zweiten Ausgangsöffnung (A2) und der dritten Ausgangsöffnung (A3) noch weitere Öffnungen aufweisen. Beispielsweise kann die Unterseite des Gehäuses offen sein.

Erfindungsgemäß umfasst das Gehäuse (1) eine erste Seite (9). Üblicherweise umfasst das Gehäuse noch mindestens eine weitere Seite. "Mindestens eine weitere Seite" bedeutet sowohl genau eine weitere Seite als auch zwei oder mehrere weitere Seiten. Erfindungsgemäß bevorzugt sind zwei oder mehrere weitere Seiten. Beispielsweise enthält das Gehäuse (1) 3 bis 10 weitere Seiten.

Es ist erfindungsgemäß außerdem bevorzugt, dass mindestens eine der weiteren Seiten des Gehäuses (1) direkt an die erste Seite (9) des Gehäuses (1) anschließt.

Die erste Seite (9) des Gehäuses (1) ist üblicherweise planar und im Allgemeinen im Wesentlichen senkrecht zur Extrusionsrichtung des Werkzeugs (W) angeordnet.

Unter der "Extrusionsrichtung des Werkzeugs (W)" wird die Richtung verstanden, in die das Fasermaterial (FM) und das schäumbare Polymer (SP) in dem erfindungsgemäßen Verfahren extrudiert werden. Die Extrusionsrichtung wird im Rahmen der vorliegenden Erfindung auch als "z-Richtung" bezeichnet.

"Im Wesentlichen senkrecht" zur Extrusionsrichtung bedeutet im Rahmen der vorliegenden Erfindung, dass die Abweichung der Winkel zwischen der Extrusionsrichtung und der ersten Seite (9) von 90° maximal ⁺/- 45° beträgt, bevorzugt maximal ⁺/- 25° und insbesondere bevorzugt maximal ⁺/- 5°.

Die erste Seite (9) weist erfindungsgemäß eine Breite (B) auf. Zudem weist die erste Seite (9) üblicherweise eine Höhe (H) auf.

Unter der Breite (B) wird die gesamte Breite der ersten Seite (9) verstanden. Unter der Höhe (H) wird die gesamte Höhe der ersten Seite (9) verstanden.

Im Rahmen der vorliegenden Erfindung ist die Höhe (H) der ersten Seite (9) bevorzut kleiner oder gleich der Breite (B) der ersten Seite (9). Die Breite (B) der ersten Seite (9) wird im Rahmen der vorliegenden Erfindung auch als "y-Richtung" bezeichnet, die Höhe (H) der ersten Seite (9) wird auch als "x-Richtung" bezeichnet, bezogen auf ein rechtwinkliges zweidimensionales Koordinatensystem, das in der Ebene der ersten Seite (9) liegt. Im Wesentlichen senkrecht zu diesem zweidimensionalen Koordinatensystem ist die Extrusionsrichtung in z-Richtung des zugehörigen dreidimensionalen Koordinatensystems angeordnet. Für die Bezeichnung "im Wesentlichen senkrecht" gelten die zuvor beschriebenen Ausführungen und Bevorzugungen entsprechend.

Erfindungsgemäß sind an der ersten Seite (9) des Gehäuses (1) mindestens eine erste Ausgangsöffnung (A1), mindestens eine zweite Ausgangsöffnung (A2) und mindestens eine dritte Ausgangsöffnung (A3) angeordnet.

"Mindestens eine erste Ausgangsöffnung (A1)" bedeutet im Rahmen der vorliegenden Erfindung sowohl genau eine erste Ausgangsöffnung (A1) als auch zwei oder mehrere erste Ausgangsöffnungen (A1).

Die Zahl der ersten Ausgangsöffnungen (A1) des Werkzeugs (W) ist üblicherweise abhängig von der Anzahl der in Verfahrensschritt a) des erfindungsgemäßen Verfahrens bereitgestellten Fasermaterialien (FM). Wird beispielsweise genau ein Fasermaterial (FM) bereitgestellt, so ist genau eine erste Ausgangsöffnung (A1) bevorzugt. Werden dagegen zwei oder mehrere Fasermaterialien (FM) bereitgestellt, so sind zwei oder mehrere erste Ausgangsöffnungen (A1) bevorzugt.

Es ist auch möglich, dass im erfindungsgemäßen Verfahren zwei oder mehrere Fasermaterialien (FM) bereitgestellt werden und das Werkzeug (W) genau eine erste Ausgangsöffnung (A1) umfasst. Dann entspricht die Gesamtlänge der ersten Ausgangsöffnung (A1) üblicherweise mindestens der Summe der Breiten der zwei oder mehreren Fasermaterialien (FM).

Das im erfindungsgemäßen Verfahren bereitgestellte Fasermaterial (FM) weist üblicherweise eine Länge, eine Dicke und eine Breite auf. Im Rahmen der vorliegenden Erfindung wird unter der Länge des Fasermaterials (FM) die Ausdehnung des Fasermaterials (FM) in Extrusionsrichtung verstanden. Unter der Breite wird die Ausdehnung des Fasermaterials (FM) in Richtung der Breite (B) der ersten Seite (9) verstanden, wobei sich die Breite des Fasermaterials (FM) auf das flache Fasermaterial (FM) bezieht, also ohne dass beispielsweise mittels eines Formwerkzeugs (8) Strukturierungen eingebracht worden sind.

Vorzugsweise ist die Dicke des Fasermaterials (FM) kleiner oder gleich der Breite des Fasermaterials (FM). Bezogen auf ein rechtwinkliges Koordinatensystem wird erfindungsgemäß die Länge des Fasermaterials (FM) auch als z-Richtung bezeichnet, die Breite auch als y-Richtung und die Dicke auch als x-Richtung.

Als erste Ausgangsöffnung (A1) eignen sich prinzipiell alle dem Fachmann bekannten Ausgangsöffnungen. Bevorzugt ist eine erste Ausgangsöffnung (A1), die im erfindungsgemäßen Verfahren die Extrusion des Fasermaterials (FM) ermöglicht. Beispielsweise ist die erste Ausgangsöffnung (A1) schlitzförmig, sternförmig oder punktförmig. Bevorzugt ist die erste Ausgangsöffnung (A1) schlitzförmig oder punktförmig.

Es ist erfindungsgemäß also bevorzugt, dass die erste Ausgangsöffnung (A1) schlitzförmig, sternförmig oder punktförmig ist und/oder die erste Seite (9) 1 bis 50, besonders bevorzugt 1 bis 25, insbesondere bevorzugt 1 bis 10, erste Ausgangsöffnungen (A1) umfasst.

Werden zwei oder mehrere erste Ausgangsöffnungen (A1) verwendet, so können diese auch verschiedene Formen aufweisen.

Im Allgemeinen wird die erste Ausgangsöffnung (A1) im erfindungsgemäßen Verfahren an die Form des in Verfahrensschritt a) des erfindungsgemäßen Verfahrens bereitgestellten Fasermaterials (FM) angepasst. Wird in dem erfindungsgemäßen Verfahren beispielsweise ein flaches Fasermaterial (FM) bereitgestellt, so ist die erste Ausgangsöffnung (A1) bevorzugt schlitzförmig. Wird als Fasermaterial (FM) beispielsweise ein Fasermaterial (FM) mit einem runden Querschnitt verwendet, so ist die erste Ausgangsöffnung (A1) bevorzugt punktförmig.

Eine schlitzförmige erste Ausgangsöffnung (A1) kann beispielsweise linear sein, sie kann aber auch Kurven und/oder Ecken aufweisen und beispielsweise wellenförmig und/oder mäanderförmig sein.

Ist die erste Ausgangsöffnung (A1) beispielsweise wellenförmig, so bedeutet dies, dass es entlang der Breite (B) der ersten Seite (9) mindestens einen Bereich (P) gibt, in dem die erste Ausgangsöffnung (A1) eine positive Steigung aufweist, daran anschließend gibt es einen Bereich (O) mit einer Länge (L_{O}), der eine Steigung von 0 aufweist, daran anschließend gibt es einen Bereich (N) mit einer negativen Steigung, worauf ein Bereich (U) mit einer Länge (L_{U}) und einer Steigung von 0 folgt. Eine derartige Abfolge kann sich wiederholen. Diese Abfolge kann sich regelmäßig oder unregelmäßig wiederholen bevorzugt wiederholt sich diese Abfolge regelmäßig.

"Regelmäßig" bedeutet, dass sich beispielsweise die Länge und die Steigung jedes Bereiches wiederholen. "Unregelmäßig" bedeutet, dass sich Bereiche zwar wiederholen, aber beispielsweise Länge und/oder Steigung variieren.

Es ist außerdem möglich, dass beispielsweise der Bereich (O) und/oder der Bereich (U) eine Länge (L_{O}) und/oder (L_{U}) von null Zentimetern aufweist.

Weisen diese beiden Bereiche (O) und (U) eine Länge (L_{O}) und (L_{U}) von null Zentimetern auf und der Bereich (P) und der Bereich (N) weisen über den gesamten Bereich jeweils die gleiche Steigung auf, so verläuft die erste Ausgangsöffnung (A1) beispielsweise zickzackförmig.

Erfindungsgemäß besonders bevorzugt ist die erste Ausgangsöffnung (A1) schlitzförmig, am meisten bevorzugt zickzackförmig.

Die erste Ausgangsöffnung (A1) kann auch unterbrochen sein. Dann umfasst die erste Ausgangsöffnung (A1) zwei oder mehrere erste Ausgangsöffnungen (A1). Weist die erste Ausgangsöffnung (A1) die vorstehend beschriebenen Bereiche auf, so kann sie sowohl zwischen den einzelnen Bereichen als auch innerhalb der einzelnen Bereiche unterbrochen sein.

Die erste Ausgangsöffnung (A1) kann beispielsweise durch die folgenden sechs Werte beschrieben werden:
- Breite (B_{A1}): Die Breite (B_{A1}) gibt die Breite der ersten Ausgangsöffnung (A1) gemessen über die Breite (B) der ersten Seite (9) an. Die Breite (B_{A1}) kann über einen weiten Bereich variieren. Sie liegt in einer erfindungsgemäßen Ausführungsform im Bereich von 10 bis 4000 cm, bevorzugt im Bereich von 200 bis 2500 cm und insbesondere bevorzugt im Bereich von 500 bis 1300 cm.
- Höhe (H_{A}): Die Höhe (H_{A}) gibt den Abstand zwischen der untersten Unterkante der ersten Ausgangsöffnung (A1) und der obersten Oberkante der ersten Ausgangsöffnung (A1) an. Die Bezeichnungen "Unterkante" und "Oberkante" beziehen sich auf die Kanten entlang der Höhe (H) der ersten Seite (9). Die Höhe (H_{A}) liegt in einer erfindungsgemäßen Ausführungsform im Bereich von 1 bis 200 mm, bevorzugt im Bereich von 5 bis 150 mm und insbesondere bevorzugt im Bereich von 5 bis 100 mm.
- Dicke (t): Die Dicke (t) gibt die Ausdehnung zwischen einer Unterkante und einer Oberkante eines der oben beschriebenen Bereiche der ersten Ausgangsöffnung (A1) an. Die Dicke (t) kann über die Breite (B_{A1}) der ersten Ausgangsöffnung (A1) variieren. Bevorzugt ist die Dicke (t) der ersten Ausgangsöffnung (A1) im Wesentlichen konstant. "Im Wesentlichen konstant" bedeutet im Rahmen der vorliegenden Erfindung, dass die Dicke (t) über die Breite (B_{A1}) der ersten Ausgangsöffnung (A1) um maximal ⁺/- 0,1 mm, bevorzugt um ⁺/- 0,05 mm und insbesondere bevorzugt maximal um ⁺/- 0,01 mm variiert. Die Dicke (t) der ersten Ausgangsöffnung (A1) liegt in einer erfindungsgemäßen Ausführungsform im Bereich von 0,05 bis 10 mm, bevorzugt im Bereich von 0,1 bis 5 mm und insbesondere bevorzugt im Bereich von 0,1 bis 2 mm. In einer Ausführungsform des erfindungsgemäßen Verfahrens wird die Dicke (t) der ersten Ausgangsöffnung (A1) der Dicke des im Verfahren eingesetzten Fasermaterials (FM) angepasst.
- untere Länge (L_{U}): Die untere Länge (L_{U}) ist die Länge des vorstehend beschriebenen Bereichs (U), der eine Steigung von 0 aufweist bei einer beispielsweise wellenförmigen ersten Ausgangsöffnung (A1). Die untere Länge (L_{U}) wird entlang Breite (B) der ersten Seite (9) gemessen. Sie liegt üblicherweise im Bereich von 0 bis 100 mm, bevorzugt im Bereich von 0 bis 50 mm und insbesondere bevorzugt im Bereich von 0 bis 20 mm.
- obere Länge (L_{O}): Die obere Länge (L_{O}) ist die Länge des vorstehend beschriebenen Bereichs (O), der eine Steigung von 0 aufweist, bei einer beispielsweise wellenförmigen ersten Ausgangsöffnung (A1). Die obere Länge (L_{O}) wird entlang der Breite (B) der ersten Seite (9) gemessen. Sie liegt üblicherweise im Bereich von 0 bis 100 mm, bevorzugt im Bereich von 0 bis 50 mm und insbesondere bevorzugt im Bereich von 0 bis 20 mm.
- Winkel (α): Der Winkel (α) ist definiert als der Winkel zwischen der Tangente an den vorstehend beschriebenen Bereich (O) mit einer Steigung von 0 und dem vorstehend beschriebenen Bereich (N) mit der negativen Steigung, bei einer beispielsweise wellenförmigen ersten Ausgangsöffnung (A1). Der Winkel (α) liegt üblicherweise im Bereich von 10 bis 90°, bevorzugt im Bereich von 40 bis 90°.

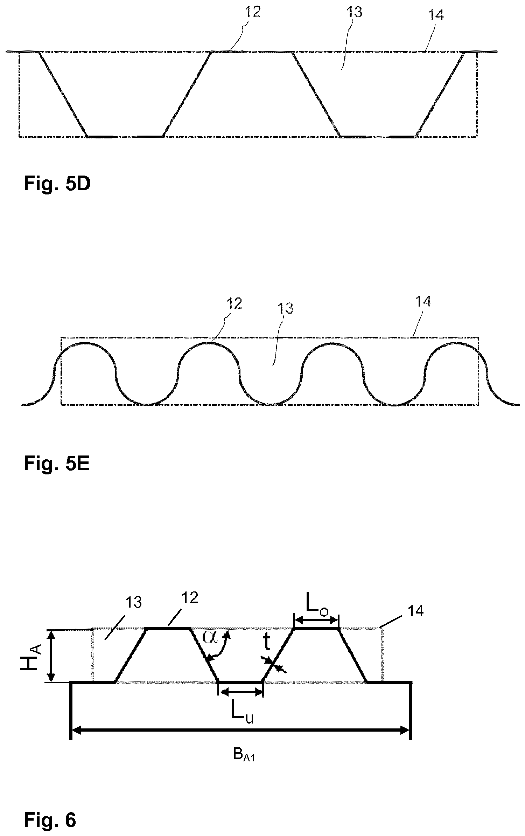

Die vorstehend beschriebenen Werte sind beispielhaft in Figur 6 gezeigt. Figur 6 zeigt einen erfindungsgemäß hergestellten Faser/Schaum-Verbundwerkstoff 14. Dieser umfasst einen Schaumstoff 13 sowie ein Fasermaterial (FM; 12). Die erste Ausgangsöffnung (A1) des Werkzeugs (W) zur Herstellung dieses Faser/Schaum-Verbundwerkstoffs 14 weist die gleiche Form wie das Fasermaterial (FM; 12) des Faser/Schaum-Verbundwerkstoffs 14. In Figur 6 sind daher die vorstehend beschriebenen Werte für die erste Ausgangsöffnung (A1) in das Fasermaterial (FM; 12) eingezeichnet.

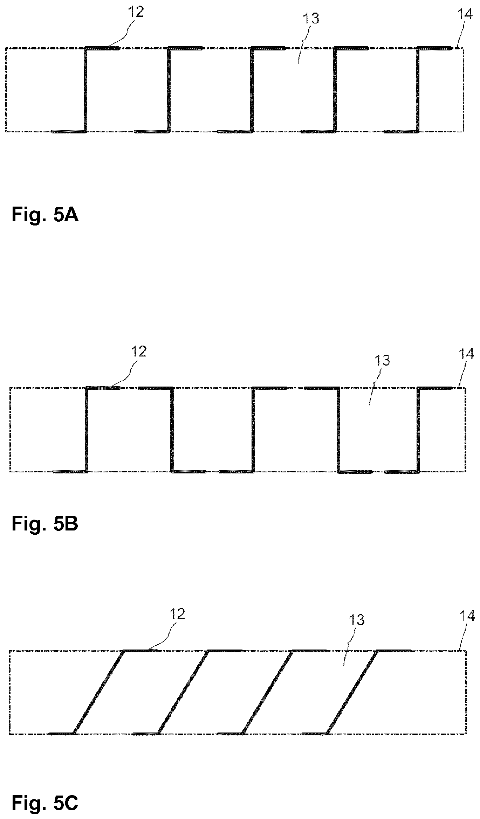

Die Figur 5a bis 5e zeigt verschiedene mit dem erfindungsgemäßen Verfahren hergestellte verstärkte Schaumstoffe. Die Linien mit den Bezugszeichen 12 entsprechen dem Fasermaterial (FM). Zur Herstellung der Faser/Schaum-Verbundwerkstoffe 14 wurde das Fasermaterial (FM, 12) durch eine erste Ausgangsöffnung (A1) in der Form der Linien mit dem Bezugszeichen 12 extrudiert. Dementsprechend sind die Linien mit dem Bezugszeichen 12 in der Figur 5a bis 5e Beispiele für Formen der ersten Ausgangsöffnung (A1).

Erfindungsgemäß umfasst die erste Seite (9) zusätzlich mindestens eine zweite Ausgangsöffnung (A2) und mindestens eine dritte Ausgangsöffnung (A3).

"Mindestens eine zweite Ausgangsöffnung (A2)" bedeutet im Rahmen der vorliegenden Erfindung sowohl genau eine zweite Ausgangsöffnung (A2) als auch zwei oder mehrere zweite Ausgangsöffnungen (A2). Erfindungsgemäß bevorzugt sind zwei oder mehrere zweite Ausgangsöffnungen (A2).

"Mindestens eine dritte Ausgangsöffnung (A3)" bedeutet im Rahmen der vorliegenden Erfindung sowohl genau eine dritte Ausgangsöffnung (A3) als auch zwei oder mehrere dritte Ausgangsöffnungen (A3). Bevorzugt sind zwei oder mehrere dritte Ausgangsöffnungen (A3).

Beispielsweise kann die erste Seite (9) 1 bis 1000 zweite Ausgangsöffnungen (A2) umfassen. Bevorzugt umfasst die erste Seite (9) 3 bis 500 zweite Ausgangsöffnungen (A2) und besonders bevorzugt umfasst die erste Seite (9) 5 bis 100 zweite Ausgangsöffnungen (A2).

Beispielsweise umfasst die erste Seite (9) 1 bis 1000 dritte Ausgangsöffnungen (A3). Bevorzugt umfasst die erste Seite (9) 3 bis 500 dritte Ausgangsöffnungen (A3) und insbesondere bevorzugt umfasst die erste Seite (9) 5 bis 100 dritte Ausgangsöffnungen (A3).

Beispielsweise weist also die erste Seite (9) 1 bis 1000 zweite Ausgangsöffnungen (A2) und/oder 1 bis 1000 dritte Ausgangsöffnungen (A3) auf.

Als zweite Ausgangsöffnung (A2) des Werkzeugs (W) eignen sich prinzipiell alle dem Fachmann bekannten Ausgangsöffnungen. Bevorzugt sind zweite Ausgangsöffnungen (A2), die es ermöglichen, das schäumbare Polymer (SP) im erfindungsgemäßen Verfahren zu extrudieren. Die zweite Ausgangsöffnung (A2) kann prinzipiell alle bekannten Formen aufweisen. Die zweite Ausgangsöffnung (A2) kann beispielsweise schlitzförmig, sternförmig, ellipsoidal, polygonal oder punktförmig sein. Bevorzugt ist die zweite Ausgangsöffnung (A2) punktförmig.

Die Größe der zweiten Ausgangsöffnung (A2) kann über einen weiten Bereich variieren. Bevorzugt weist die zweite Ausgangsöffnung (A2) einen Durchmesser im Bereich von 0,1 bis 5 mm auf, besonders bevorzugt einen Durchmesser im Bereich von 0,5 bis 3 mm und insbesondere bevorzugt einen Durchmesser im Bereich von 1,5 bis 2 mm.

Wenn die zweite Ausgangsöffnung (A2) einen von der runden Form abweichenden Querschnitt aufweist, so wird der Durchmesser als Mittelwert aus dem größten und dem kleinsten Durchmesser der zweiten Ausgangsöffnung (A2) bestimmt. Verfahren hierzu sind dem Fachmann bekannt.

Für die dritte Ausgangsöffnung (A3) gelten die Ausführungen und Bevorzugungen wie sie zuvor für die zweite Ausgangsöffnung (A2) beschrieben worden sind entsprechend.

Bevorzugt ist die zweite Ausgangsöffnung (A2) und/oder die dritte Ausgangsöffnung (A3) des erfindungsgemäßen Werkzeugs (W) daher schlitzförmig, sternförmig, ellipsoidal, polygonal oder punktförmig.

Erfindungsgemäß alternieren die zweite Ausgangsöffnung (A2) und die dritte Ausgangsöffnung (A3) mit der ersten Ausgangsöffnung (A1) zumindest über einen Teil der Breite (B) der ersten Seite (9). Darunter ist zu verstehen, dass über die Breite (B) der ersten Seite (9) beispielsweise abwechselnd eine zweite Ausgangsöffnung (A2), dann eine erste Ausgangsöffnung (A1) und dann eine dritte Ausgangsöffnung (A3) angeordnet ist. Die Abfolge der Ausgangsöffnungen folgt also beispielsweise dem Muster A2, A1, A3. Umfasst das Werkzeug (W) zwei oder mehrere zweite Ausgangsöffnungen (A2) und/oder zwei oder mehrere dritte Ausgangsöffnungen (A3) so kann das Muster beispielsweise der Folge A2, A1, A3, A1, A2, A1, A3, A1, A2 folgen.

Anders ausgedrückt werden die zweite Ausgangsöffnung (A2) und die dritte Ausgangsöffnung (A3) zumindest über einen Teil der Breite (B) der ersten Seite (9) voneinander durch die erste Ausgangsöffnung (A1) separiert.

Umfasst das Werkzeug (W) zwei oder mehrere zweite Ausgangsöffnungen (A2) und/oder zwei oder mehrere dritte Ausgangsöffnungen (A3), so können auch zwei oder mehrere zweite Ausgangsöffnungen (A2) durch die erste Ausgangsöffnung (A1) von zwei oder mehreren dritten Ausgangsöffnungen (A3) separiert sein.

Es ist erfindungsgemäß außerdem möglich, dass die zweite Ausgangsöffnung (A2) und die dritte Ausgangsöffnung (A3) mit der ersten Ausgangsöffnung (A1) nur über einen Teil der Breite (B) der ersten Seite (9) alternieren.

In einer weiteren erfindungsgemäßen Ausführungsform alternieren die zweite Ausgangsöffnung (A2) und die dritte Ausgangsöffnung (A3) zudem mit der ersten Ausgangsöffnung (A1) über die Höhe (H) der ersten Seite (9).

Die zweite Ausgangsöffnung (A2) und die dritte Ausgangsöffnung (A3) können über die gesamte Breite (B) und die gesamte Höhe (H) der ersten Seite (9) angeordnet sein.

Bevorzugt sind die zweite Ausgangsöffnung (A2) und die dritte Ausgangsöffnung (A3) in einem Bereich zwischen der untersten Unterkante der ersten Ausgangsöffnung (A1) und der obersten Oberkante der ersten Ausgangsöffnung (A1) angeordnet.

Weiterhin bevorzugt sind die zweite Ausgangsöffnung (A2) und/oder die dritte Ausgangsöffnung (A3) über die gesamte Breite (B_{A1}) der ersten Ausgangsöffnung (A1) angeordnet.

In einer weiteren bevorzugten Ausführungsform sind die zweite Ausgangsöffnung (A2) und/oder die dritte Ausgangsöffnung (A3) nur über einen Teil der Breite (B_{A1}) der ersten Ausgangsöffnung (A1) angeordnet.

In einer weiteren bevorzugten Ausführungsform sind die zweite Ausgangsöffnung (A2) und/oder die dritte Ausgangsöffnung (A3) über einen Bereich entlang der Breite (B) der ersten Seite (9) angeordnet, der größer ist als die Breite (B_{A1}) der ersten Ausgangsöffnung (A1).

Bevorzugt verläuft die erste Ausgangsöffnung (A1) zickzackförmig und die zweite Ausgangsöffnung (A2) ist oberhalb der Oberkante der ersten Ausgangsöffnung (A1) angeordnet und die dritte Ausgangsöffnung (A3) ist unterhalb der Unterkante der ersten Ausgangsöffnung (A1) angeordnet.

In einer insbesondere bevorzugten Ausführungsform des erfindungsgemäßen Werkzeugs (W) gibt es innerhalb des Werkzeugs (W) keinen Kontakt zwischen der zweiten Ausgangsöffnung (A2) und der ersten Ausgangsöffnung (A1) sowie zwischen der dritten Ausgangsöffnung (A3) und der ersten Ausgangsöffnung (A1). Im erfindungsgemäßen Verfahren bedeutet dies, dass das Fasermaterial (FM), das in Verfahrensschritt d) durch die erste Ausgangsöffnung (A1) extrudiert wird, in dem Werkzeug (W) nicht mit dem schäumbaren Polymer (SP), das durch die zweite Ausgangsöffnung (A2) und die dritte Ausgangsöffnung (A3) extrudiert wird, in Kontakt kommt. Das schäumbare Polymer (SP) und das Fasermaterial (FM) treten also erst bei Extrusion aus dem Werkzeug (W) miteinander in Kontakt.

Erfindungsgemäß umfasst das Gehäuse (1) des Werkzeugs (W) außerdem mindestens eine erste Eingangsöffnung (E1) und mindestens eine zweite Eingangsöffnung (E2).

"Mindestens eine erste Eingangsöffnung (E1)" bedeutet im Rahmen der vorliegenden Erfindung sowohl genau eine erste Eingangsöffnung (E1) als auch zwei oder mehrere erste Eingangsöffnungen (E1).

Die Zahl der ersten Eingangsöffnungen (E1) des Werkzeugs (W) ist beispielsweise abhängig von der Zahl der in Verfahrensschritt a) des erfindungsgemäßen Verfahrens bereitgestellten Fasermaterialien (FM). Wird beispielsweise genau ein Fasermaterial (FM) bereitgestellt, so ist genau eine erste Eingangsöffnung (E1) bevorzugt. Werden dagegen zwei oder mehrere Fasermaterialien (FM) bereitgestellt, so umfasst die erste Eingangsöffnung (E1) bevorzugt zwei oder mehrere erste Eingangsöffnungen (E1).

Es ist auch möglich, dass zwei oder mehrere Fasermaterialien (FM) bereitgestellt werden und das Werkzeug (W) genau eine erste Eingangsöffnung (E1) umfasst. Dann entspricht die Breite (B_{E1}) der ersten Eingangsöffnung (E1) üblicherweise mindestens der Summe der Breiten der zwei oder mehr Fasermaterialien (FM).

Die erste Eingangsöffnung (E1) weist eine Breite (B_{E1}) und eine Dicke (D_{E1}) auf. Die Breite (B_{E1}) der ersten Eingangsöffnung (E1) liegt vorzugsweise senkrecht zur Extrusionsrichtung. Definitionsgemäß ist die Dicke (D_{E1}) der ersten Eingangsöffnung (E1) immer kleiner oder gleich der Breite (B_{E1}) der ersten Eingangsöffnung (E1). Die Breite (B_{E1}) liegt üblicherweise senkrecht zur Dicke (D_{E1}). Bezüglich eines rechtwinkligen zweidimensionalen Koordinatensystems wird die Breite (B_{E1}) auch als y-Richtung bezeichnet und die Dicke (D_{E1}) als x-Richtung. Die Dicke (D_{E1}) kann sowohl senkrecht zur Extrusionsrichtung liegen als auch parallel zu der Extrusionsrichtung, abhängig davon, wo die erste Eingangsöffnung (E1) am Gehäuse (1) angeordnet ist.

Als erste Eingangsöffnung (E1) eignen sich prinzipiell alle dem Fachmann bekannten Eingangsöffnungen. Bevorzugt ist die erste Eingangsöffnung (E1) so geformt, dass das Fasermaterial (FM) in dem erfindungsgemäßen Verfahren durch die erste Eingangsöffnung (E1) des Werkzeugs (W) dem Werkzeug (W) zugeführt werden kann. Insbesondere bevorzugt ist die erste Eingangsöffnung (E1) punktförmig oder schlitzförmig.

Im Allgemeinen wird die erste Eingangsöffnung (E1) im erfindungsgemäßen Verfahren an die Form des in Verfahrensschritt a) des erfindungsgemäßen Verfahrens bereitgestellten Fasermaterials (FM) angepasst. Wird in dem erfindungsgemäßen Verfahren beispielsweise ein flaches Fasermaterial (FM) bereitgestellt, so ist die erste Eingangsöffnung (A1) bevorzugt schlitzförmig. Wird als Fasermaterial (FM) beispielsweise ein Fasermaterial (FM) mit einem runden Querschnitt verwendet, so ist die erste Eingangsöffnung (A1) bevorzugt punktförmig.

Außerdem kann die erste Eingangsöffnung (E1) Vorrichtungen umfassen, die das Zuführen des Fasermaterials (FM) im erfindungsgemäßen Verfahren erleichtern. Beispielsweise kann die erste Eingangsöffnung (E1) Rollen umfassen, über die das Fasermaterial (FM) in das Werkzeug (W) geleitet werden kann.

Die erste Eingangsöffnung (E1) kann an einer beliebigen Seite des Gehäuses (1) angeordnet sein. Üblicherweise ist die erste Eingangsöffnung (E1) an einer der gegebenenfalls vorhandenen weiteren Seiten angeordnet. Insbesondere bevorzugt ist die erste Eingangsöffnung (E1) am Gehäuse (1) so angeordnet, dass das Fasermaterial (FM), das im erfindungsgemäßen Verfahren durch die erste Eingangsöffnung (E1) dem Werkzeug (W) zugeführt wird und durch die erste Ausgangsöffnung (A1) extrudiert wird, außer durch das gegebenenfalls zwischen der ersten Eingangsöffnung (E1) und der ersten Ausgangsöffnung (A1) enthaltene Formwerkzeug (8) in seiner Breite nicht geknickt und/oder gedreht wird.

Der Abstand zwischen der ersten Eingangsöffnung (E1) und der ersten Ausgangsöffnung (A1) kann beliebig groß sein.

Erfindungsgemäß ist die erste Ausgangsöffnung (A1) mit der ersten Eingangsöffnung (E1) verbunden. Unter "verbunden" wird im Rahmen der vorliegenden Erfindung verstanden, dass das Fasermaterial (FM) im Verfahren der vorliegenden Erfindung über die erste Eingangsöffnung (E1) dem Werkzeug (W) zugeführt werden und durch die erste Ausgangsöffnung (A1) aus dem Werkzeug (W) extrudiert werden kann.

Mit anderen Worten bedeutet "verbunden", dass die erste Eingangsöffnung (E1) mit der zweiten Ausgangsöffnung (A1) zumindest über das Fasermaterial (FM) verbunden ist, wenn dieses dem Werkzeug (W) über die erste Eingangsöffnung (E1) zugeführt wird. Es ist erfindungsgemäß also nicht erforderlich, dass sich Vorrichtungen zwischen der ersten Eingangsöffnung (E1) und der ersten Ausgangsöffnung (A1) befinden, die die erste Eingangsöffnung (E1) mit der ersten Ausgangsöffnung (A1) verbinden.

In einer Ausführungsform der vorliegenden Erfindung befinden sich Vorrichtungen zwischen der ersten Eingangsöffnung (E1) und der ersten Ausgangsöffnung (A1), die die erste Ausgangsöffnung (A1) mit der ersten Eingangsöffnung (E1) verbinden. Beispielsweise können die erste Eingangsöffnung (E1) und die erste Ausgangsöffnung (A1) durch mindestens eine Leitung, beispielsweise eine Kanalleitung, und/oder mindestens ein Förderband, miteinander verbunden werden.

Bevorzugt sind zwischen der ersten Eingangsöffnung (E1) und der ersten Ausgangsöffnung (A1) Rollen angeordnet, über die das Fasermaterial (FM) gefördert werden kann.

Bevorzugt befindet sich in der Verbindung zwischen der ersten Eingangsöffnung (E1) und der ersten Ausgangsöffnung (A1) mindestens ein Formwerkzeug (8).

"Mindestens ein Formwerkzeug (8)" bedeutet im Rahmen der vorliegenden Erfindung sowohl genau ein Formwerkzeug (8) als auch zwei oder mehrere Formwerkzeuge (8). Wenn zwei oder mehrere Formwerkzeuge (8) in dem erfindungsgemäßen Werkzeug (W) eingesetzt werden, so können die Formwerkzeuge (8) nebeneinander oder hintereinander angeordnet werden. Die Bezeichnungen "nebeneinander" und "hintereinander" geben die Anordnung der Formwerkzeuge (8) mit Blick entlang der Extrusionsrichtung an. Bevorzugt werden zwei oder mehrere Formwerkzeuge (8) hintereinander angeordnet.

Das Formwerkzeug (8) dient dazu, das Fasermaterial (FM) im erfindungsgemäßen Verfahren zu formen. Geeignete Formwerkzeuge (8) hierzu sind dem Fachmann als solche bekannt. Bevorzugt sind Formwerkzeuge (8), die das Fasermaterial (FM) kontinuierlich verformen, so dass das Verfahren der vorliegenden Erfindung kontinuierlich durchgeführt werden kann.

Das Formwerkzeug (8) kann beispielsweise Schlitze aufweisen, durch die das Fasermaterial (FM) geführt und so in die gewünschte Form gebracht werden kann. Darüber hinaus kann das Fasermaterial (FM) beispielsweise vor dem Formwerkzeug (8) oder in dem Formwerkzeug (8) erwärmt werden, um das Fasermaterial (FM) zu formen.

In einer Ausführungsform der vorliegenden Erfindung kann das Formwerkzeug (8) also erwärmt werden. Das Fasermaterial (FM) kann außerdem in dem Formwerkzeug (8) beispielsweise durch Druck verformt werden.

Das Formwerkzeug (8) ist im Allgemeinen im Wesentlichen senkrecht zur Extrusionsrichtung angeordnet. Zu "im Wesentlichen senkrecht" gelten die vorstehend beschriebenen Ausführungen und Bevorzugungen.

Vorzugsweise ist das Formwerkzeug (8) im Wesentlichen senkrecht zu der Verbindung zwischen der ersten Eingangsöffnung (E1) und der ersten Ausgangsöffnung (A1) angeordnet.

Darüber hinaus ist es möglich, dass das Formwerkzeug (8) entlang der Extrusionsrichtung beispielsweise konisch zuläuft.

Es ist bevorzugt, dass das Formwerkzeug (8) eine dreidimensionale Strukturierung aufweist. Besonders bevorzugt weist die dreidimensionale Strukturierung des Formwerkzeugs (8) die gleiche Form wie die erste Ausgangsöffnung (A1) auf.

Es ist insbesondere bevorzugt, dass das Formwerkzeug (8) des Werkzeugs (W) eine dreidimensionale Strukturierung in Form der ersten Ausgangsöffnungen (A1) aufweist und/oder im Wesentlichen senkrecht zur Verbindung zwischen der ersten Eingangsöffnung (E1) und der ersten Ausgangsöffnung (A1) angeordnet ist.

Eine dreidimensionale Strukturierung bedeutet, dass das Formwerkzeug (8) an mindestens einer Seite, die im Wesentlichen parallel zur Extrusionsrichtung verläuft, Strukturierungen aufweist, die bevorzugt im Wesentlichen senkrecht zur Extrusionsrichtung ausgeformt sind.

"Im Wesentlichen parallel" bedeutet, dass der Winkel zwischen der Seite, die die dreidimensionale Strukturierung aufweist, und der Extrusionsrichtung um maximal ⁺/- 45°, bevorzugt um maximal ⁺/- 30° und besonders bevorzugt um maximal ⁺/- 20° von der parallelen Ausrichtung abweicht.

Für die Form der dreidimensionalen Strukturierung gelten die zuvor für die Form der ersten Ausgangsöffnung (A1) beschriebenen Ausführungen und Bevorzugungen.

"Mindestens eine zweite Eingangsöffnung (E2)" bedeutet im Rahmen der vorliegenden Erfindung sowohl genau eine zweite Eingangsöffnung (E2) als auch zwei oder mehrere zweite Eingangsöffnungen (E2).

Als zweite Eingangsöffnung (E2) eignen sich prinzipiell alle dem Fachmann bekannten Eingangsöffnungen. Bevorzugt sind zweite Eingangsöffnungen (E2), die dazu geeignet sind, das schäumbare Polymer (SP) in dem erfindungsgemäßen Verfahren durch die zweite Eingangsöffnung (E2) dem Werkzeug (W) zuzuführen.

Die zweite Eingangsöffnung (E2) kann an einer beliebigen Seite am Gehäuse (1) angeordnet sein. Bevorzugt ist die zweite Eingangsöffnung an einer der weiteren Seiten angeordnet und insbesondere bevorzugt ist die zweite Eingangsöffnung (E2) an einer der weiteren Seiten angeordnet, die direkt an die erste Seite (9) anschließt. Am meisten bevorzugt ist die zweite Eingangsöffnung (E2) an einer der weiteren Seiten angeordnet, die in x-Richtung der ersten Seite (9) direkt an die erste Seite (9) anschließt. Darüber hinaus ist es bevorzugt, dass die zweite Eingangsöffnung (E2) an einer der weiteren Seiten angeordnet ist, an der nicht die erste Eingangsöffnung (E1) angeordnet ist.

Erfindungsgemäß ist die zweite Eingangsöffnung (E2) mit der zweiten Ausgangsöffnung (A2) und der dritten Ausgangsöffnung (A3) durch einen Mehrwegeverteiler (6) verbunden.

Mehrwegeverteiler (6) als solche sind dem Fachmann bekannt. Üblicherweise umfassen Mehrwegeverteiler (6) mindestens eine Einlassöffnung und mindestens zwei Auslassöffnungen. Erfindungsgemäß bevorzugt sind Mehrwegeverteiler (9) mit 1 bis 10 Einlassöffnungen und 2 bis 20 Auslassöffnungen. Erfindungsgemäß besonders bevorzugt sind Mehrwegeverteiler mit 1 bis 5 Einlassöffnungen und 2 bis 10 Auslassöffnungen und insbesondere bevorzugt sind Mehrwegeverteiler (6) mit 1 bis 3 Einlassöffnungen und 2 bis 5 Auslassöffnungen.

In einer Ausführungsform der vorliegenden Erfindung ist die zweite Ausgangsöffnung (A2) durch eine erste Auslassöffnung des Mehrwegeverteilers (6) und die Einlassöffnung des Mehrwegeverteilers (6) mit der zweiten Eingangsöffnung (E2) verbunden und die dritte Ausgangsöffnung (A3) ist durch eine zweite Auslassöffnung des Mehrwegeverteilers (6) und die Einlassöffnung des Mehrwegeverteilers (6) mit der zweiten Eingangsöffnung (E2) verbunden.

Der erfindungsgemäße Mehrwegeverteiler (6) kann weitere dem Fachmann bekannte Einbauten enthalten. Diese Einbauten können statisch oder dynamisch sein. Statische Einbauten weisen keine beweglichen Teile auf, dynamische Einbauten weisen bewegliche Teile auf. Beispiele für dynamische Einbauten sind Ventile.

In einer bevorzugten Ausführungsform des erfindungsgemäßen Werkzeugs (W) ist die zweite Ausgangsöffnung (A2) über einen ersten Breitschlitz-Verteiler (7) mit dem Mehrwegeverteiler (6) verbunden. Weiterhin ist es bevorzugt, dass die dritte Ausgangsöffnung (A3) über einen zweiten Breitschlitz-Verteiler (11) mit dem Mehrwegeverteiler (6) verbunden ist.

In einer Ausführungsform des erfindungsgemäßen Werkzeugs (W) ist also die zweite Ausgangsöffnung (A2) mit dem Mehrwege-Verteiler (6) über einen ersten Breitschlitz-Verteiler (7) verbunden und/oder die dritte Ausgangsöffnung (A3) mit dem Mehrwege-Verteiler (6) über einen zweiten Breitschlitz-Verteiler (11) verbunden.

Unter "ein erster Breitschlitz-Verteiler (7)" wird erfindungsgemäß sowohl genau ein erster Breitschlitz-Verteiler (7) verstanden als auch zwei oder mehrere erste Breitschlitz-Verteiler (7). Unter "ein zweiter Breitschlitz-Verteiler (11)" wird erfindungsgemäß sowohl genau ein zweiter Breitschlitz-Verteiler (11) verstanden als auch zwei oder mehrere zweite Breitschlitz-Verteiler (11).

Im Rahmen der vorliegenden Erfindung ist es insbesondere bevorzugt, dass die zweite Ausgangsöffnung (A2) über den ersten Breitschlitz-Verteiler (7) mit der ersten Auslassöffnung des Mehrwegeverteilers (6) verbunden ist und dass die dritte Ausgangsöffnung (A3) über den zweiten Breitschlitz-Verteiler (11) mit der zweiten Auslassöffnung des Mehrwegeverteilers (6) verbunden ist.

Breitschlitz-Verteiler als solche sind dem Fachmann bekannt. Erfindungsgemäß bevorzugt sind der erste Breitschlitz-Verteiler (7) und der zweite Breitschlitz-Verteiler (11) jeweils unabhängig voneinander ausgewählt aus der Gruppe bestehend aus Kleiderbügelverteilern, Fischschwanzverteilern und T-Verteilern. Besonders bevorzugt als erster Breitschlitz-Verteiler (7) und als zweiter Breitschlitz-Verteiler (11) sind Kleiderbügelverteiler.

Vorteilhaft bei der Verwendung eines ersten Breitschlitz-Verteilers (7) und/oder eines zweiten Breitschlitz-Verteilers (11) ist, dass durch die spezielle Führung der Kanäle in dem ersten Breitschlitz-Verteiler (7) und/oder in dem zweiten Breitschlitz-Verteiler (11) das schäumbare Polymer (SP) in dem erfindungsgemäßen Verfahren mit gleichbleibendem Druck über die gesamte Breite des ersten und/oder zweiten Breitschlitz-Verteilers (7, 11) aus der zweiten und/oder dritten Ausgangsöffnung (A2, A3) extrudiert werden kann. Das schäumbare Polymer (SP) schäumt daher gleichmäßig auf bei Austritt aus der zweiten und/oder dritten Ausgangsöffnung (A2, A3) und es wird ein besonders gleichmäßiger Schaumstoff erhalten. Ein gleichmäßiger Schaumstoff weist beispielsweise eine homogene Verteilung der Porengröße und/oder eine gleichmäßige Dicke auf.

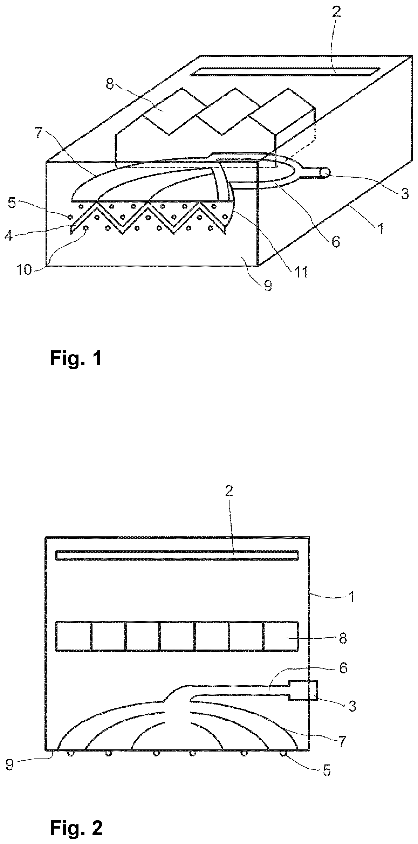

Figur 1 zeigt beispielhaft eine bevorzugte erfindungsgemäße Ausführungsform des Werkzeugs (W), das ein Gehäuse 1 umfasst. Das Gehäuse 1 weist eine erste Seite 9 auf. An dieser ersten Seite 9 ist eine zickzackförmige erste Ausgangsöffnung (A1, 4) angeordnet sowie mehrere zweite Ausgangsöffnungen (A2, 5) und mehrere dritte Ausgangsöffnungen (A3, 10). Die zweiten Ausgangsöffnungen (A2, 5) und die dritten Ausgangsöffnungen (A3, 10) alternieren über die gesamte Breite (B_{A1}) der ersten Ausgangsöffnung (A1, 4) mit der ersten Ausgangsöffnung (A1, 4). Die zweiten Ausgangsöffnungen (A2, 5) sind über den ersten Breitschlitz-Verteiler 7 mit dem Mehrwegeverteiler 6 verbunden und die dritten Ausgangsöffnungen (A3, 10) sind über den zweiten Breitschlitz-Verteiler 11 mit dem Mehrwegeverteiler 6 verbunden. Über den Mehrwegeverteiler 6 sind die zweiten Ausgangsöffnungen (A2, 5) und die dritten Ausgangsöffnungen (A3, 10) mit der zweiten Eingangsöffnung (E2, 3), die im Gehäuse 1 enthalten ist, verbunden. Das Gehäuse 1 weist außerdem eine erste Eingangsöffnung (E1, 2) auf. Zwischen der ersten Eingangsöffnung (E1, 2) und der ersten Ausgangsöffnung (A1, 4) befindet sich ein Formwerkzeug 8. Dessen eine Seite weist die gleiche Zickzackform auf wie die erste Ausgangsöffnung (A1, 4).

Figur 2 zeigt die Aufsicht auf das in Figur 1 dargestellte Werkzeug (W). Darin wird dargestellt, wie der erste Breitschlitz-Verteiler 7 den Mehrwegeverteiler 6 mit den zweiten Ausgangsöffnungen (A2, 5) verbindet.

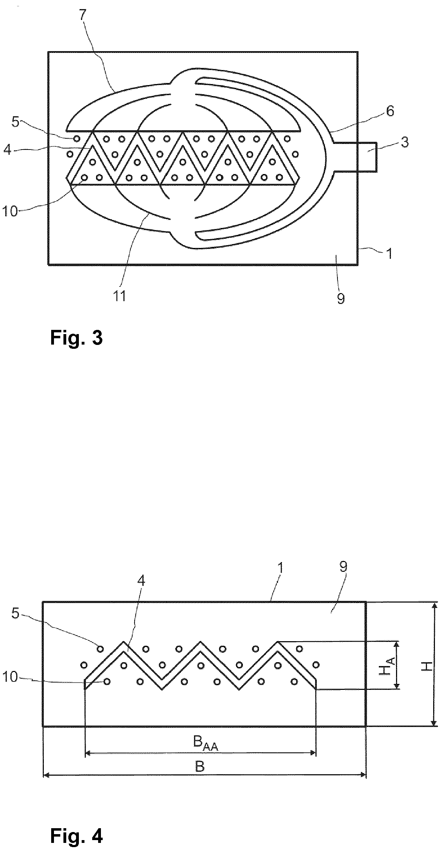

Die Figur 3 zeigt einen Blick auf die erste Seite 9 des Werkzeugs (W) gemäß Figur 1 und den hinter der ersten Seite 9 liegenden ersten Breitschlitz-Verteiler 7 und den zweiten Breitschlitz-Verteiler 11 sowie den Mehrwegeverteiler 6. Es ist dargestellt, wie die zweite Eingangsöffnung (E2, 3) über die eine Einlassöffnung und die zwei Auslassöffnungen des Mehrwegeverteilers 6 mit dem ersten Breitschlitz-Verteiler (7) und dem zweiten Breitschlitz-Verteiler 11 sowie den zweiten Ausgangsöffnungen (A2, 5) und den dritten Ausgangsöffnungen (A3, 10) verbunden ist. Es versteht sich von selbst, dass der in Figur 3 dargestellte erste Breitschlitz-Verteiler 7 und der zweite Breitschlitz-Verteiler 11 sowie der Mehrwegeverteiler 6 räumlich hinter der ersten Seite 9 angeordnet sind.

Die Figur 4 zeigt einen Blick auf die erste Seite 9 einer Ausführungsform des erfindungsgemäßen Werkzeugs (W), um die Breite (B) der ersten Seite 9 und die Höhe (H) der ersten Seite 9 zu verdeutlichen sowie die Breite (B_{A1}) der ersten Ausgangsöffnung (A1, 4) und die Höhe (H_{A}) der ersten Ausgangsöffnung (A1, 4). Wie auch in den Figuren 1 bis 3 ist die erste Ausgangsöffnung (A1, 4) zickzackförmig an der ersten Seite 9 angeordnet.

Ein weiterer Gegenstand der vorliegenden Erfindung ist ein Verfahren zur Herstellung eines Faser/Schaum-Verbundwerkstoffs unter Verwendung des vorstehend beschriebenen Werkzeugs (W).

Gegenstand der vorliegenden Erfindung ist somit ein Verfahren zur Herstellung eines Faser/Schaum-Verbundwerkstoffs durch Extrusion durch das erfindungsgemäße Werkzeug (W), umfassend die folgenden Schritte:
a) Bereitstellen eines Fasermaterials (FM) und eines schäumbaren Polymers (SP),
b) Zuführen des Fasermaterials (FM) durch die erste Eingangsöffnung (E1) in das Werkzeug (W),
c) Zuführen des schäumbaren Polymers (SP) durch die zweite Eingangsöffnung (E2) in das Werkzeug (W), und
d) Extrusion des Fasermaterials (FM) durch die erste Ausgangsöffnung (A1) des Werkzeugs (W) und Extrusion des schäumbaren Polymers (SP) durch die zweite Ausgangsöffnung (A2) und durch die dritte Ausgangsöffnung (A3) des Werkzeugs (W), wobei das schäumbare Polymer (SP) unter Erhalt eines Schaumstoffs aufschäumt und sich mit dem Fasermaterial (FM) verbindet, unter Erhalt des Faser/Schaum-Verbundwerkstoffs.

Das erfindungsgemäße Verfahren wird nachfolgend näher definiert.

In dem erfindungsgemäßen Verfahren wird ein Faser/Schaum-Verbundwerkstoff durch Extrusion durch das erfindungsgemäße Werkzeug (W) hergestellt. Für das im erfindungsgemäßen Verfahren eingesetzte Werkzeug (W) gelten die zuvor beschriebenen Ausführungen und Bevorzugungen entsprechend.

Vorzugsweise wird das Verfahren kontinuierlich durchgeführt.

In Verfahrensschritt a) werden ein Fasermaterial (FM) und ein schäumbares Polymer (SP) bereitgestellt.

"Ein Fasermaterial (FM)" bedeutet im Rahmen der vorliegenden Erfindung sowohl genau ein Fasermaterial als auch zwei oder mehrere Fasermaterialien. "Ein schäumbares Polymer (SP)" bedeutet im Rahmen der vorliegenden Erfindung sowohl genau ein schäumbares Polymer als auch eine Mischung aus zwei oder mehreren schäumbaren Polymeren.

Als Fasermaterial (FM) eignen sich prinzipiell alle dem Fachmann bekannten Fasermaterialien. Beispielsweise ist das Fasermaterial (FM) ausgewählt aus der Gruppe bestehend aus anorganischen Mineralfasern, organischen Fasern, natürlichen Polymeren, natürlichen organischen Fasern pflanzlichen oder tierischen Ursprungs, Kohlenstofffasern und Mischungen daraus.

Geeignete anorganische Mineralfasern sind dem Fachmann bekannt. Bevorzugt sind anorganische Mineralfasern ausgewählt aus der Gruppe bestehend aus Glasfasern, Basaltfasern, Metallfasern, Keramikfasern und Nanotubefasern.

Geeignete organische Fasern sind dem Fachmann ebenfalls bekannt. Bevorzugt sind organische Fasern ausgewählt aus der Gruppe bestehend aus Polykondensationsfasern und Polyadditionsfasern.

Geeignete natürliche Polymere sind dem Fachmann bekannt. Bevorzugt sind natürliche Polymere ausgewählt aus der Gruppe bestehend aus zellulosebasierte Fasern, Gummifasern, stärkebasierten Fasern und glukosebasierten Fasern.

Vorzugsweise ist das Fasermaterial (FM) daher ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus.

Das Fasermaterial (FM) kann in allen dem Fachmann bekannten Formen vorliegen. Bevorzugt liegt das Fasermaterial (FM) als Gewebe, Gelege, Geflecht, Vlies, Organosheet, Kardenband und/oder Roving vor.

Das Fasermaterial (FM) kann eine Schlichte enthalten. Darüber hinaus ist es möglich, dass das Fasermaterial (FM) ein Matrixmaterial, ein Bindemittel, thermoplastische Fasern, Pulver und/oder Partikel enthält.

Es ist im erfindungsmäßen Verfahren also bevorzugt, dass
i) in Verfahrensschritt a) ein Fasermaterial (FM) ausgewählt aus der Gruppe bestehend aus anorganischen Mineralfasern, organischen Fasern, natürlichen Polymeren, natürlichen organischen Fasern pflanzlichen oder tierischen Ursprungs, Kohlenstofffasern und Mischungen daraus bereitgestellt wird, vorzugsweise ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus und/oder
ii) in Verfahrensschritt a) das Fasermaterial (FM) als Gewebe, Gelege, Geflecht, Vlies, Organosheet, Kardenband und/oder Roving vorliegt und/oder
iii) in Verfahrensschritt a) ein Fasermaterial (FM) bereitgestellt wird, das eine Schlichte enthält und/oder
iv) in Verfahrensschritt a) ein Fasermaterial (FM) bereitgestellt wird, das ein Matrixmaterial, ein Bindemittel, thermoplastische Fasern, Pulver und/oder Partikel enthält.

Das Fasermaterial (FM) kann in Verfahrensschritt a) nach allen dem Fachmann bekannten Methoden bereitgestellt werden. Bevorzugt wird das Fasermaterial (FM) auf Rollen bereitgestellt.

Als schäumbares Polymer (SP) eignet sich prinzipiell jedes dem Fachmann bekannte schäumbare Polymer.

Erfindungsgemäß bevorzugt wird in Verfahrensschritt a) als schäumbares Polymer (SP) ein thermoplastisches Polymer bereitgestellt, vorzugsweise ein thermoplastisches Polymer ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymeren und Mischungen daraus.

Diese Polymere sind dem Fachmann als solche bekannt.

Das schäumbare Polymer (SP) kann in Verfahrensschritt a) nach allen dem Fachmann bekannten Methoden bereitgestellt werden. Bevorzugt wird das schäumbare Polymer (SP) in einem Extruder aufgeschmolzen und ein Treibmittel in dem schäumbaren Polymer (SP) gelöst.

Als Treibmittel eignen sich prinzipiell alle dem Fachmann bekannten Treibmittel. Bevorzugt ist das Treibmittel ausgewählt aus der Gruppe bestehend aus Pentan, Wasser, Stickstoff und Kohlenstoffdioxid.

Bevorzugt werden im Bereich von 0,2 bis 20 Gew.-% des Treibmittels in dem schäumbaren Polymer (SP) gelöst, bezogen auf das Gesamtgewicht des schäumbaren Polymers (SP).

Bevorzugt werden im erfindungsgemäßen Verfahren daher in dem in Verfahrensschritt a) bereitgestellten schäumbaren Polymer (SP) 0,2 bis 20 Gew.-% eines Treibmittels gelöst, bezogen auf das Gesamtgewicht des schäumbaren Polymers (SP).

In einer bevorzugten Ausführungsform wird das Treibmittel bei erhöhtem Druck in dem schäumbaren Polymer (SP) gelöst. Bevorzugt wird der Druck dann bis zum Austritt aus dem erfindungsgemäßen Werkzeug (W) aufrechterhalten. Dadurch wird vermieden, dass ein Teil des Treibmittels vorzeitig aus dem schäumbaren Polymer (SP) ausgast.

In Verfahrensschritt b) wird das Fasermaterial (FM) durch die erste Eingangsöffnung (E1) dem Werkzeug (W) zugeführt. Das Zuführen kann nach allen dem Fachmann bekannten Methoden erfolgen. Beispielsweise kann das Fasermaterial (FM) über Rollen geführt werden oder über ein Förderband, um es durch die erste Eingangsöffnung (E1) dem Werkzeug (W) zuzuführen.

Üblicherweise wird das Fasermaterial (FM) so durch die erste Eingangsöffnung (E1) in das Werkzeug (W) geführt, dass es in seiner Breite nicht knickt oder verdreht, außer durch das gegebenenfalls im Werkzeug (W) vorhandene Formwerkzeug (8).

In einer Ausführungsform des vorliegenden Verfahrens wird das Fasermaterial (FM) durch das gegebenenfalls in dem Werkzeug (W) enthaltene Formwerkzeug (8) geführt. Dabei wird das Fasermaterial (FM) zweidimensional verformt, beispielsweise durch das Einwirken von Wärme und/oder Druck.

In Verfahrensschritt c) wird das schäumbare Polymer (SP) durch die zweite Eingangsöffnung (E2) dem Werkzeug (W) zugeführt. Es versteht sich von selbst, dass das schäumbare Polymer (SP) in Schritt c) dem Werkzeug (W) vorzugsweise in der Form zugeführt wird, in der es in Schritt a) bereitgestellt wird, vorzugsweise also in aufgeschmolzener Form und gegebenenfalls zusammen mit einem in dem schäumbaren Polymer (SP) gelösten Treibmittel.

Bei Zuführung durch die zweite Eingangsöffnung (E2) verteilt sich das schäumbare Polymer (SP) durch den erfindungsgemäßen Mehrwegeverteiler (6) gleichmäßig auf die zweite Ausgangsöffnung (A2) und die dritte Ausgangsöffnung (A3).

In Verfahrensschritt d) wird das Fasermaterial (FM) durch die erste Ausgangsöffnung (A1) des Werkzeugs (W) extrudiert und das schäumbare Polymer (SP) wird durch die zweite Ausgangsöffnung (A2) und durch die dritte Ausgangsöffnung (A3) des Werkzeugs (W) extrudiert.

Bei der Extrusion des schäumbaren Polymers (SP) durch die zweite Ausgangsöffnung (A2) und durch die dritte Ausgangsöffnung (A3) des Werkzeugs (W) schäumt das schäumbare Polymer (SP) unter Erhalt eines Schaumstoffs auf.

Wenn das schäumbare Polymer (SP) durch zwei oder mehrere zweite Ausgangsöffnungen (A2) und/oder zwei oder mehrere dritte Ausgangsöffnungen (A3) extrudiert wird, so verbinden sich vorzugsweise die bei der Extrusion gebildeten Schaumstoffstränge miteinander. Besonders bevorzugt verbinden sich diese Stränge des Schaumstoffs lückenlos miteinander. Dabei ist es besonders bevorzugt, dass die Verbindungsstellen mikroskopisch klein sind, dass sie also mit dem bloßen Auge nicht mehr zu erkennen sind.

Wenn das schäumbare Polymer (SP) aufschäumt, vergrößert sich sein Volumen. Dadurch kommt es in Kontakt mit dem Fasermaterial (FM) und kann sich mit diesem verbinden. Die Verbindung zwischen dem gebildeten Schaumstoff und dem Fasermaterial (FM) kann beispielsweise dadurch entstehen, dass der Schaumstoff und das Fasermaterial (FM) miteinander verkleben. Ebenso ist es möglich, dass der Schaumstoff und das Fasermaterial (FM) miteinander verschweißen. Außerdem ist es möglich, dass der Schaumstoff lediglich mechanisch an dem Fasermaterial (FM) fixiert ist, beispielsweise indem der Schaumstoff in Lücken in dem Fasermaterial (FM) eindringt.

Durch das Verbinden des Schaumstoffs mit dem Fasermaterial (FM) wird der Faser/Schaum-Verbundwerkstoff erhalten. Beispiele für derartige Faser/Schaum-Verbundwerkstoffe sind in der Figur 5a bis 5e gezeigt. Darin sind verschiedene zweidimensionale Strukturen für das Fasermaterial (FM, 12) gezeigt. In den Figuren 5a, 5b, 5c und 5d wurden zwei oder mehr Fasermaterialien (FM, 12) eingesetzt. In Figur 5e wurde genau ein Fasermaterial (FM, 12) eingesetzt.

Die erfindungsgemäß hergestellten Faser/Schaum-Verbundwerkstoffe können im Anschluss an ihre Herstellung weiterverarbeitet werden. Beispielsweise können mehrere Faser/Schaum-Verbundwerkstoffe miteinander verschweißt oder verklebt werden. Bevorzugt werden mehrere Faser/Schaum-Verbundwerkstoffe miteinander verschweißt.

Dies kann nach dem Fachmann bekannten Methoden erfolgen.

Durch das Verkleben oder Verschweißen mehrerer Faser/Schaum-Verbundwerkstoffe wird die mechanische Stabilität der erfindungsgemäß hergestellten Faser/Schaum-Verbundwerkstoffe zusätzlich erhöht.

Die miteinander verklebten oder verschweißten Faser/Schaum-Verbundwerkstoffe können anschließend beispielsweise zerschnitten werden.

Darüber hinaus ist es möglich, dass der Faser/Schaum-Verbundwerkstoff in einem weiteren Verfahrensschritt mit Harz infiltriert wird. Methoden hierzu sind dem Fachmann bekannt und sind beispielsweise in der WO 03/024705 beschrieben.

Selbstverständlich ist es möglich, die erfindungsgemäß hergestellten Faser/Schaum-Verbundwerkstoffe in mehreren Schritten weiterzuverarbeiten, beispielsweise kann zunächst der Faser/Schaum-Verbundwerkstoff mit Harz infiltriert werden und anschließend mehrere derart mit Harz infiltrierte Faser/Schaum-Verbundwerkstoffe miteinander verschweißt oder verklebt werden.

Bevorzugt wird der in Verfahrensschritt d) des erfindungsgemäßen Verfahrens erhaltene Faser/Schaum-Verbundwerkstoff in einem weiteren Verfahrensschritt mit Harz infiltriert und/oder der erhaltene Faser/Schaum-Verbundwerkstoff weist einen Faservolumenanteil im Bereich von 0,1 bis 20 Vol.-% auf, bezogen auf das Gesamtvolumen des Faser/Schaum-Verbundwerkstoffs.

Gegenstand der vorliegenden Erfindung ist außerdem die Verwendung des erfindungsgemäßen Werkzeugs (W) zur Herstellung eines Faser/Schaum-Verbundwerkstoffs durch Extrusion.

### Bezugszeichenliste

- 1: Gehäuse
- 2: erste Eingangsöffnung (E1)
- 3: zweite Eingangsöffnung (E2)
- 4: erste Ausgangsöffnung (A1)
- 5: zweite Ausgangsöffnung (A2)
- 6: 3-Wege-Verteiler
- 7: erster Breitschlitzverteiler
- 8: Formwerkzeug
- 9: erste Seite
- 10: dritte Ausgangsöffnung (A3)
- 11: zweiter Breitschlitzverteiler
- 12: Fasermaterial (FM)
- 13: Schaumstoff
- 14: Faser/Schaum-Verbundwerkstoff

- H: Höhe der ersten Seite (9)
- B: Breite der ersten Seite (9)
- B_{A1}: Breite der ersten Ausgangsöffnung (A1)
- H_{A}: Höhe der ersten Ausgangsöffnung (A1)
- L_{U}: untere Länge
- L_{O}: obere Länge
- t: Dicke der ersten Ausgangsöffnung (A1)
- α: Winkel

## Patentansprüche

1. Werkzeug (W), umfassend ein Gehäuse (1) mit
- mindestens einer ersten Eingangsöffnung (E1) und mindestens einer zweiten Eingangsöffnung (E2),
- mindestens einer ersten Ausgangsöffnung (A1), mindestens einer zweiten Ausgangsöffnung (A2) und mindestens einer dritten Ausgangsöffnung (A3) und
- einer ersten Seite (9) mit einer Breite (B),
wobei
- die erste Ausgangsöffnung (A1), die zweite Ausgangsöffnung (A2) und die dritte Ausgangsöffnung (A3) an der ersten Seite (9) des Gehäuses (1) angeordnet sind und wobei
- die erste Ausgangsöffnung (A1) mit der ersten Eingangsöffnung (E1) verbunden ist,
**dadurch gekennzeichnet, dass**
- die zweite Ausgangsöffnung (A2) und die dritte Ausgangsöffnung (A3) mit der zweiten Eingangsöffnung (E2) über einen Mehrwege-Verteiler (6) miteinander verbunden sind und
- die zweite Ausgangsöffnung (A2) und die dritte Ausgangsöffnung (A3) mit der ersten Ausgangsöffnung (A1) zumindest über einen Teil der Breite (B) der ersten Seite (9) alternieren.

2. Werkzeug (W) gemäß Anspruch 1, **dadurch gekennzeichnet, dass** die zweite Ausgangsöffnung (A2) mit dem Mehrwege-Verteiler (6) über einen ersten Breitschlitz-Verteiler (7) verbunden ist und/oder die dritte Ausgangsöffnung (A3) mit dem Mehrwege-Verteiler (6) über einen zweiten Breitschlitz-Verteiler (11) verbunden ist.

3. Werkzeug (W) gemäß einem der Ansprüche 1 oder 2, **dadurch gekennzeichnet, dass** sich in der Verbindung zwischen der ersten Eingangsöffnung (E1) und der ersten Ausgangsöffnung (A1) mindestens ein Formwerkzeug (8) befindet.

4. Werkzeug (W) gemäß Anspruch 3, **dadurch gekennzeichnet, dass** das Formwerkzeug (8) eine dreidimensionale Strukturierung in Form der ersten Ausgangsöffnungen (A1) aufweist und/oder im Wesentlichen senkrecht zur Verbindung zwischen der ersten Eingangsöffnung (E1) und der ersten Ausgangsöffnung (A1) angeordnet ist.

5. Werkzeug (W) gemäß einem der Ansprüche 1 bis 4, **dadurch gekennzeichnet, dass** die erste Seite (9) 1 bis 1000 zweite Ausgangsöffnungen (A2) und/oder 1 bis 1000 dritte Ausgangsöffnungen (A3) aufweist.

6. Werkzeug (W) gemäß einem der Ansprüche 1 bis 5, **dadurch gekennzeichnet, dass** die zweite Ausgangsöffnung (A2) und/oder die dritte Ausgangsöffnung (A3) schlitzförmig, sternförmig, ellipsoidal, polygonal oder punktförmig ist.

7. Werkzeug (W) gemäß einem der Ansprüche 1 bis 6, **dadurch gekennzeichnet, dass** die erste Ausgangsöffnung (A1) schlitzförmig, sternförmig oder punktförmig ist und/oder die erste Seite (9) 1 bis 50 erste Ausgangsöffnungen (A1) umfasst.

8. Werkzeug (W) gemäß einem der Ansprüche 1 bis 7, **dadurch gekennzeichnet, dass** die erste Ausgangsöffnung (A1) zickzackförmig verläuft und die zweite Ausgangsöffnung (A2) oberhalb der Oberkante der ersten Ausgangsöffnung (A1) angeordnet ist und die dritte Ausgangsöffnung (A3) unterhalb der Unterkante der ersten Ausgangsöffnung (A1) angeordnet ist.

9. Verfahren zur Herstellung eines Faser/Schaum-Verbundwerkstoffes durch Extrusion durch das Werkzeug (W) gemäß einem der Ansprüche 1 bis 8, umfassend die folgenden Schritte:
a) Bereitstellen eines Fasermaterials (FM) und eines schäumbaren Polymers (SP),
b) Zuführen des Fasermaterials (FM) durch die erste Eingangsöffnung (E1) in das Werkzeug (W),
c) Zuführen des schäumbaren Polymers (SP) durch die zweite Eingangsöffnung (E2) in das Werkzeug (W), und
d) Extrusion des Fasermaterials (FM) durch die erste Ausgangsöffnung (A1) des Werkzeugs (W) und Extrusion des schäumbaren Polymers (SP) durch die zweite Ausgangsöffnung (A2) und durch die dritte Ausgangsöffnung (A3) des Werkzeugs (W), wobei das schäumbare Polymer (SP) unter Erhalt eines Schaumstoffs aufschäumt und sich mit dem Fasermaterial (FM) verbindet, unter Erhalt des Faser/Schaum-Verbundwerkstoffs.

10. Verfahren gemäß Anspruch 9, **dadurch gekennzeichnet, dass**
i) in Verfahrensschritt a) ein Fasermaterial (FM) ausgewählt aus der Gruppe bestehend aus anorganischen Mineralfasern, organischen Fasern, natürlichen Polymeren, natürlichen organischen Fasern pflanzlichen oder tierischen Ursprungs, Kohlenstofffasern und Mischungen daraus bereitgestellt wird, vorzugsweise ausgewählt aus der Gruppe bestehend aus Glasfasern, Basaltfasern, Metallfasern, Keramikfasern, Nanotubefasern, Polykondensationsfasern, Polyadditionsfasern, zellulosebasierten Fasern, Gummifasern, stärkebasierten Fasern, glukosebasierten Fasern und Mischungen daraus und/oder
ii) in Verfahrensschritt a) das Fasermaterial (FM) als Gewebe, Gelege, Geflecht, Vlies, Organosheet, Kardenband und/oder Roving vorliegt und/oder
iii) in Verfahrensschritt a) ein Fasermaterial (FM) bereitgestellt wird, das eine Schlichte enthält und/oder
iv) in Verfahrensschritt a) ein Fasermaterial (FM) bereitgestellt wird, das ein Matrixmaterial, ein Bindemittel, thermoplastische Fasern, Pulver und/oder Partikel enthält.

11. Verfahren gemäß einem der Ansprüche 9 oder 10, **dadurch gekennzeichnet, dass** in Verfahrensschritt a) als schäumbares Polymer (SP) ein thermoplastisches Polymer bereitgestellt wird, vorzugsweise ein thermoplastisches Polymer ausgewählt aus der Gruppe bestehend aus thermoplastischen Elastomeren, thermoplastischen Elastomeren mit Copolymerstruktur, Polyetheramiden, Polyetherestern, Polyurethanen, Styrolpolymeren, Polyacrylaten, Polycarbonaten, Polyestern, Polyethern, Polyamiden, Polyethersulfonen, Polyetherketonen, Polyimiden, Polyvinylchloriden, Polyolefinen, Polyacrylnitrilen, Polyethersulfiden, deren Copolymeren und Mischungen daraus.

12. Verfahren gemäß einem der Ansprüche 9 bis 11, **dadurch gekennzeichnet, dass** in dem in Verfahrensschritt a) bereitgestellten schäumbaren Polymer (SP) 0,2 bis 20 Gew.-% eines Treibmittels gelöst werden, bezogen auf das Gesamtgewicht des schäumbaren Polymers (SP).

13. Verfahren gemäß einem der Ansprüche 9 bis 12, **dadurch gekennzeichnet, dass** das Verfahren kontinuierlich durchgeführt wird.

14. Verfahren gemäß einem der Ansprüche 9 bis 13, **dadurch gekennzeichnet, dass** der in Verfahrensschritt d) erhaltene Faser/Schaum-Verbundwerkstoff in einem weiteren Verfahrensschritt mit Harz infiltriert wird und/oder der erhaltene Faser/Schaum-Verbundwerkstoff einen Faservolumenanteil im Bereich von 0,1 bis 20 Vol.-% aufweist, bezogen auf das Gesamtvolumen des Faser/Schaum-Verbundwerkstoffs.

15. Verwendung des Werkzeugs (W) gemäß einem der Ansprüche 1 bis 8 zur Herstellung eines Faser/Schaum-Verbundwerkstoffes durch Extrusion.

## Claims

1. A tool (W) comprising a housing (1) having
- at least one first inlet opening (E1) and at least one second inlet opening (E2),
- at least one first outlet opening (A1), at least one second outlet opening (A2) and at least one third outlet opening (A3) and
- a first side (9) having a width (B),
where
- the first outlet opening (A1), the second outlet opening (A2) and the third outlet opening (A3) are arranged on the first side (9) of the housing (1) and where
- the first outlet opening (A1) is connected to the first inlet opening (E1),
wherein
- the second outlet opening (A2) and the third outlet opening (A3) are connected to one another by the second inlet opening (E2) via a multiway distributor (6) and
- the second outlet opening (A2) and the third outlet opening (A3) alternate with the first outlet opening (A1) at least over part of the width (B) of the first side (9).

2. The tool (W) according to claim 1, wherein the second outlet opening (A2) is connected to the multiway distributor (6) via a first slot distributor (7) and/or the third outlet opening (A3) is connected to the multiway distributor (6) via a second slot distributor (11).

3. The tool (W) according to either of claims 1 and 2, wherein there is at least one mold (8) in the connection between the first inlet opening (E1) and the first outlet opening (A1).

4. The tool (W) according to claim 3, wherein the mold (8) has three-dimensional structuring in the form of the first outlet openings (A1) and/or is arranged essentially perpendicularly to the connection between the first inlet opening (E1) and the first outlet opening (A1).

5. The tool (W) according to any of claims 1 to 4, wherein the first side (9) has 1 to 1000 second outlet openings (A2) and/or 1 to 1000 third outlet openings (A3).

6. The tool (W) according to any of claims 1 to 5, wherein the second outlet opening (A2) and/or the third outlet opening (A3) is slot-shaped, star-shaped, ellipsoidal, polygonal or punctiform.

7. The tool (W) according to any of claims 1 to 6, wherein the first outlet opening (A1) is slot-shaped, star-shaped or punctiform and/or the first side (9) comprises 1 to 50 first outlet openings (A1).

8. The tool (W) according to any of claims 1 to 7, wherein the first outlet opening (A1) runs in a zigzag and the second outlet opening (A2) is disposed above the upper edge of the first outlet opening (A1) and the third outlet opening (A3) is disposed below the lower edge of the first outlet opening (A1).

9. A process for producing a fiber/foam composite by extrusion through the tool (W) according to any of claims 1 to 8, comprising the following steps:
a) providing a fiber material (FM) and a foamable polymer (SP),
b) feeding the fiber material (FM) through the first inlet opening (E1) into the tool (W),
c) feeding the foamable polymer (SP) through the second inlet opening (E2) into the tool (W), and
d) extruding the fiber material (FM) through the first outlet opening (A1) of the tool (W) and extruding the foamable polymer (SP) through the second outlet opening (A2) and through the third outlet opening (A3) of the tool (W), with foaming of the foamable polymer (SP) to obtain a foam and bonding to the fiber material (FM) to obtain the fiber/foam composite.

10. The process according to claim 9, wherein
i) in process step a) a fiber material (FM) selected from the group consisting of inorganic mineral fibers, organic fibers, natural polymers, natural organic fibers of vegetable or animal origin, carbon fibers and mixtures thereof is provided, preferably selected from the group consisting of glass fibers, basalt fibers, metal fibers, ceramic fibers, nanotube fibers, polycondensation fibers, polyaddition fibers, cellulose-based fibers, rubber fibers, starch-based fibers, glucose-based fibers and mixtures thereof, and/or
ii) in process step a) the fiber material (FM) is in the form of a weave, scrim, braid, nonwoven, organosheet, card sliver and/or roving and/or
iii) in process step a) a fiber material (FM) comprising a size is provided and/or
iv) in process step a) a fiber material (FM) comprising a matrix material, a binder, thermoplastic fibers, powder and/or particles is provided.

11. The process according to either of claims 9 and 10, wherein in process step a) the foamable polymer (SP) provided is a thermoplastic polymer, preferably a thermoplastic polymer selected from the group consisting of thermoplastic elastomers, thermoplastic elastomers having copolymer structure, polyether amides, polyether esters, polyurethanes, styrene polymers, polyacrylates, polycarbonates, polyesters, polyethers, polyamides, polyether sulfones, polyether ketones, polyimides, polyvinyl chlorides, polyolefins, polyacrylonitriles, polyether sulfides, copolymers thereof and mixtures thereof.

12. The process according to any of claims 9 to 11, wherein 0.2% to 20% by weight of a blowing agent is dissolved in the foamable polymer (SP) provided in process step a), based on the total weight of the foamable polymer (SP).

13. The process according to any of claims 9 to 12, which is conducted continuously.

14. The process according to any of claims 9 to 13, wherein the fiber/foam composite obtained in process step d) is infiltrated with resin in a further process step and/or the fiber/foam composite obtained has a proportion by volume of fibers in the range from 0.1% to 20% by volume, based on the total volume of the fiber/foam composite.

15. The use of the tool (W) according to any of claims 1 to 8 for production of a fiber/foam composite by extrusion.

## Revendications

1. Outil (W), comprenant un boîtier (1) avec
- au moins une première ouverture d'entrée (E1) et au moins une deuxième ouverture d'entrée (E2),
- au moins une première ouverture de sortie (A1), au moins une deuxième ouverture de sortie (A2) et au moins une troisième ouverture de sortie (A3), et
- un premier côté (9) ayant une largeur (B),
- la première ouverture de sortie (A1), la deuxième ouverture de sortie (A2) et la troisième ouverture de sortie (A3) étant agencées sur le premier côté (9) du boîtier (1) et
- la première ouverture de sortie (A1) étant reliée avec la première ouverture d'entrée (E1),
**caractérisé en ce que**
- la deuxième ouverture de sortie (A2) et la troisième ouverture de sortie (A3) sont reliées l'une avec l'autre avec la deuxième ouverture d'entrée (E2) par l'intermédiaire d'un distributeur à plusieurs voies (6), et
- la deuxième ouverture de sortie (A2) et la troisième ouverture de sortie (A3) alternent avec la première ouverture de sortie (A1) au moins sur une partie de la largeur (B) du premier côté (9).

2. Outil (W) selon la revendication 1, **caractérisé en ce que** la deuxième ouverture de sortie (A2) est reliée avec le distributeur à plusieurs voies (6) par l'intermédiaire d'un premier distributeur à fente large (7) et/ou la troisième ouverture de sortie (A3) est reliée avec le distributeur à plusieurs voies (6) par l'intermédiaire d'un deuxième distributeur à fente large (11).

3. Outil (W) selon l'une quelconque des revendications 1 ou 2, **caractérisé en ce qu'**au moins un outil de moulage (8) se trouve dans la liaison entre la première ouverture d'entrée (E1) et la première ouverture de sortie (A1).

4. Outil (W) selon la revendication 3, **caractérisé en ce que** l'outil de moulage (8) présente une structuration tridimensionnelle sous la forme des premières ouvertures de sortie (A1) et/ou est agencé essentiellement perpendiculairement à la liaison entre la première ouverture d'entrée (E1) et la première ouverture de sortie (A1).

5. Outil (W) selon l'une quelconque des revendications 1 à 4, **caractérisé en ce que** le premier côté (9) comprend 1 à 1 000 deuxièmes ouvertures de sortie (A2) et/ou 1 à 1 000 troisièmes ouvertures de sortie (A3).

6. Outil (W) selon l'une quelconque des revendications 1 à 5, **caractérisé en ce que** la deuxième ouverture de sortie (A2) et/ou la troisième ouverture de sortie (A3) sont en forme de fente, en forme d'étoile, ellipsoïdales, polygonales ou ponctuelles.

7. Outil (W) selon l'une quelconque des revendications 1 à 6, **caractérisé en ce que** la première ouverture de sortie (A1) est en forme de fente, en forme d'étoile ou ponctuelle et/ou le premier côté (9) comprend 1 à 50 premières ouvertures de sortie (A1).

8. Outil (W) selon l'une quelconque des revendications 1 à 7, **caractérisé en ce que** la première ouverture de sortie (A1) s'étend en forme de zigzag et la deuxième ouverture de sortie (A2) est agencée au-dessus du bord supérieur de la première ouverture de sortie (A1) et la troisième ouverture de sortie (A3) est agencée en dessous du bord inférieur de la première ouverture de sortie (A1).

9. Procédé de fabrication d'un matériau composite fibre/mousse par extrusion par l'outil (W) selon l'une quelconque des revendications 1 à 8, comprenant les étapes suivantes :
a) la préparation d'un matériau fibreux (FM) et d'un polymère moussable (SP),
b) l'introduction du matériau fibreux (FM) par la première ouverture d'entrée (E1) dans l'outil (W),
c) l'introduction du polymère moussable (SP) par la deuxième ouverture d'entrée (E2) dans l'outil (W), et
d) l'extrusion du matériau fibreux (FM) par la première ouverture de sortie (A1) de l'outil (W) et l'extrusion du polymère moussable (SP) par la deuxième ouverture de sortie (A2) et par la troisième ouverture de sortie (A3) de l'outil (W), le polymère moussable (SP) moussant avec obtention d'une mousse et se liant avec le matériau fibreux (FM), avec obtention du matériau composite fibre/mousse.

10. Procédé selon la revendication 9, **caractérisé en ce que**
i) dans l'étape de procédé a), un matériau fibreux (FM) choisi dans le groupe constitué par les fibres minérales inorganiques, les fibres organiques, les polymères naturels, les fibres organiques naturelles d'origine végétale ou animale, les fibres de carbone et les mélanges de celles-ci est préparé, de préférence choisi dans le groupe constitué par les fibres de verre, les fibres de basalte, les fibres métalliques, les fibres céramiques, les fibres de nanotubes, les fibres de polycondensation, les fibres de polyaddition, les fibres à base de cellulose, les fibres de caoutchouc, les fibres à base d'amidon, les fibres à base de glucose et les mélanges de celles-ci et/ou
ii) dans l'étape de procédé a), le matériau fibreux (FM) se présente sous la forme d'un tissu, d'une nappe, d'un treillis, d'un non-tissé, d'une feuille organique, d'une bande de carde et/ou d'un stratifil et/ou
iii) dans l'étape de procédé a), un matériau fibreux (FM) qui contient un encollage est préparé et/ou
iv) dans l'étape de procédé a), un matériau fibreux (FM) qui contient un matériau de matrice, un liant, des fibres thermoplastiques, des poudres et/ou des particules est préparé.

11. Procédé selon l'une quelconque des revendications 9 ou 10, **caractérisé en ce que**, dans l'étape de procédé a), un polymère thermoplastique est préparé en tant que polymère moussable (SP), de préférence un polymère thermoplastique choisi dans le groupe constitué par les élastomères thermoplastiques, les élastomères thermoplastiques à structure copolymère, les polyéther-amides, les polyéther-esters, les polyuréthanes, les polymères de styrène, les polyacrylates, les polycarbonates, les polyesters, les polyéthers, les polyamides, les polyéther-sulfones, les polyéther-cétones, les polyimides, les polychlorures de vinyle, les polyoléfines, les polyacrylonitriles, les polyéther-sulfures, leurs copolymères et les mélanges de ceux-ci.

12. Procédé selon l'une quelconque des revendications 9 à 11, **caractérisé en ce que** 0,2 à 20 % en poids d'un agent gonflant est dissous dans le polymère moussable (SP) préparé dans l'étape de procédé a), par rapport au poids total du polymère moussable (SP).

13. Procédé selon l'une quelconque des revendications 9 à 12, **caractérisé en ce que** le procédé est réalisé en continu.

14. Procédé selon l'une quelconque des revendications 9 à 13, **caractérisé en ce que** le matériau composite fibre/mousse obtenu dans l'étape de procédé d) est infiltré avec une résine dans une étape de procédé supplémentaire et/ou le matériau composite fibre/mousse obtenu présente une proportion en volume de fibres dans la plage allant de 0,1 à 20 % en volume, par rapport au volume total du matériau composite fibre/mousse.

15. Utilisation de l'outil (W) selon l'une quelconque des revendications 1 à 8 pour la fabrication d'un matériau composite fibre/mousse par extrusion.
